(19)

Europäisches
Patentamt
European
Patent Office
Office européen
des brevets

(11) **EP 2 675 002 A1**

(12) **EUROPEAN PATENT APPLICATION**

(43) Date of publication:
**18.12.2013 Bulletin 2013/51**

(21) Application number: **13171687.0**

(22) Date of filing: **12.06.2013**

(51) Int Cl.:
*H01M 4/04* (2006.01)    *H01M 4/131* (2010.01)
*H01M 4/1391* (2010.01)    *H01M 4/36* (2006.01)
*H01M 4/505* (2010.01)    *H01M 4/62* (2006.01)
*H01M 10/0525* (2010.01)    *H01M 4/525* (2010.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **13.06.2012   KR 20120063409**

(71) Applicants:
• **Samsung SDI Co., Ltd.**
 **Yongin-si, Gyeonggi-do (KR)**
• **Samsung Corning Precision Materials Co., Ltd.**
 **Chungcheongnam-do 336-841 (KR)**
• **Samsung Fine Chemicals Co., Ltd.**
 **Ulsan 680-090 (KR)**

(72) Inventors:
• **Mun, Jun-young**
 **449-712 Gyeonggi-do (KR)**
• **Park, Jin-hwan**
 **449-712 Gyeonggi-do (KR)**
• **Yoon, Jae-gu**
 **449-712 Gyeonggi-do (KR)**
• **Park, Jun-ho**
 **449-712 Gyeonggi-do (KR)**

(74) Representative: **Zijlstra, Robert Wiebo Johan
Elkington and Fife LLP
Prospect House
8 Pembroke Road
Sevenoaks, Kent TN13 1XR (GB)**

(54) **Positive active material, method of preparing the same, and lithium battery including the positive active material**

(57)    A positive active material including a lithium transition metal oxide with a layered or spinel structure; and a plurality of CNTs on a surface of the lithium transition metal oxide.

FIG. 1

**Description**

BACKGROUND OF THE INVENTION

The present disclosure relates to a positive active material, a method of preparing the same, and a lithium battery including the positive active material, and more particularly, to a positive active material with improved charge/discharge rate capability and lifespan, a method of preparing the positive active material, and a lithium battery including the positive active material.

Lithium batteries, particularly lithium ion batteries (LIBs), have been employed as power supplies for many mobile devices due to their high energy densities and ease of design. Recently, as lithium secondary batteries have been employed as power supplies for electric cars as well as portable information technology (IT) devices, research into materials having improved energy density and longer lifetime has increased. Nonetheless, there remains a need for a material that can provide improved energy density and improved lifetime.

SUMMARY OF THE INVENTION

Provided is a positive active material with an improved electrical conductivity, an improved charge/discharge rate capability, and improved lifespan.

Provided is a method of preparing a positive active material with an improved electrical conductivity, an improved charge/discharge rate capability, and an improved lifespan.

Provided is a lithium battery including the positive active material.

Additional aspects will be set forth in part in the description which follows and, in part, will be apparent from the description.

According to an aspect, a positive active material includes a lithium transition metal oxide with a layered or spinel structure; and a plurality of carbon nanotubes (CNTs) on a surface of the lithium transition metal oxide.

An average aspect ratio of the CNTs may be 50 or less.

An average diameter of the CNTs may be from about 1 nanometer (nm) to about 50 nm.

The CNTs may be single-walled CNTs, multi-walled CNTs, or a combination thereof.

A $I_D/I_G$ ratio of the single-walled CNTs, when determined by Raman spectroscopy using a laser at a wavelength of 514.5 nm, may be from about 1.0 to about 2.0, wherein the $I_D/I_G$ ratio is a ratio of a maximum peak intensity of a D band between about 1340 inverse centimeters ($cm^{-1}$) and about 1360 $cm^{-1}$ to a maximum peak intensity of a G band between about 1575 $cm^{-1}$ and about 1600 $cm^{-1}$.

A $I_D/I_G$ ratio of the multi-walled CNTs, when determined by Raman spectroscopy using a laser at a wavelength of 514.5 nm, may be from about 0.1 to about 1.0, wherein the $I_D/I_G$ ratio is a ratio of a maximum peak intensity of a D band between about 1340 $cm^{-1}$ and about 1360 $cm^{-1}$ to a maximum peak intensity of a G band between about 1575 $cm^{-1}$ and about 1600 $cm^{-1}$.

A portion of the CNTs may be amorphous.

A content of the CNTs may be from about 0.01 parts to about 15 parts by weight, based on 100 parts by weight of the lithium transition metal oxide.

The lithium transition metal oxide may be a lithium transition metal oxide represented Chemical Formulas 1 through 4, or a combination thereof:

$$xLi[Li_{1/3}Me_{2/3}]O_2\text{-}(1\text{-}x)LiMe'O_2 \qquad \text{Chemical Formula 1}$$

wherein $0 < x < 0.9$, Me is Mn, Mo, W, V, Ti, Zr, Ru, Rh, Pd, Os, Ir, Pt, or a combination thereof, and Me' is Ni, Mn, Co, or a combination thereof,

$$yLi[Li_{1/3}((M1)_a(M2)_b (Mn)_c)_{2/3}]O_2\text{-}(1\text{-}y)LiMe'O_2 \qquad \text{Chemical Formula 2}$$

wherein $0 \leq a \leq 1/3$, $0 \leq b \leq 1/3$, $a+b+c=1$, $0 < y < 0.9$, M1 is Ni, Cu, Zn, Co, Cr, Fe, Mg, or a combination thereof, M2 is Mo, W, V, Ti, Zr, Ru, Rh, Pd, Os, Ir, Pt, or a combination thereof, and and Me' is Ni, Mn, Co, or a combination thereof

$$Li_dCO_{1\text{-}e\text{-}g} Ni_e(M3)_gO_2\text{-}j(X1)_j \qquad \text{Chemical Formula 3}$$

wherein $0.8 < d \leq 1.6$, $0 \leq e \leq 1$, $0 \leq g \leq 0.5$, $0 \leq j \leq 1$, M3 is Mn, Ni, Co, Cu, Mg, Na, Ca, Ti, Zn, Ga, Ge, Al, Cr, Mg, Sr, Mo, W, Ti, Zr, Ru, Rh, Pd, Os, Ir, Ag, Au, Hf, Sn, Pt, or a combination thereof, and X1 is O, F, S, P, or a combination thereof, or

$$Li_p mn_{2-q}(m4)_q O_{4-t}(X_2)_t \qquad \text{Chemical Formula 4}$$

wherein $0.8 < p \leq 1.6$, $0 \leq q \leq 1$, $0 \leq t \leq 1$, M4 is Mn, Ni, Co, Cu, Mg, Na, Ca, Ti, Zn, Ga, Ge, Al, Cr, Mg, Sr, Mo, W, V, Ti, Zr, Ru, Rh, Pd, Os, Ir, Ag, Au, Hf, Sn, Pt, or a combination thereof, and X2 is O, F, S, P, or a combination thereof.

According to another aspect, a method of preparing a positive active material includes disposing a plurality of CNTs on a surface of a lithium transition metal oxide with a layered or spinel structure using a physical or chemical surface treatment method to prepare the positive active material.

The method may include forming CNTs on a surface of a lithium transition metal oxide using a dry surface treatment method.

Also disclosed is a positive electrode for a lithium battery including: the positive active material disclosed above; and a binder.

According to another aspect, a lithium battery includes a positive electrode, an electrolyte, and a negative electrode, wherein the positive electrode includes the positive active material disclosed above.

A driving voltage of the positive active material may be $4.3 \pm 0.1$ volts versus lithium or greater.

The positive electrode may further include a conductive material.

A content of the conductive material may be from about 0.1 part to about 10 parts by weight, based on 100 parts by weight of the positive electrode.

A carbon concentration on a surface of the positive electrode, when determined by X-ray photoelectron spectroscopy (XPS), may be 20 atomic percent (atom% or at%) or greater.

Also disclosed is a method of manufacturing a lithium battery, the method including: stacking a positive electrode, a separator, and a negative electrode, wherein the positive electrode includes the positive active material disclosed above.

BRIEF DESCRIPTION OF THE DRAWINGS

These and/or other aspects will become apparent and more readily appreciated from the following description of the embodiments, taken in conjunction with the accompanying drawings in which:

FIG. 1 is a schematic view of an embodiment of a positive active material;

FIG. 2A is a scanning electron microscope (SEM) image at a magnification of 50,000x of a positive active material of Example 1;

FIG. 2B is a SEM image at a magnification of 50,000x of a positive active material of Example 5;

FIG. 2C is a SEM image at a magnification of 50,000x of a positive active material of Comparative Example 1;

FIG. 2D is a SEM image at a magnification of 50,000x of a positive active material of Comparative Example 3;

FIG. 3A is a Raman spectrum of carbon nanotubes (CNTs) on a surface of the positive active material of Example 1;

FIG. 3B is a Raman spectrum of carbon nanotubes (CNTs) on a surface of the positive active material of Example 6;

FIG. 4 is a disassembled cross-section view of an embodiment of a lithium battery;

FIG. 5 is a graph of intensity (arbitrary units) versus binding energy (electron volts, eV) showing an XPS spectrum of a C1s valence band when determined by X-ray photoelectron spectroscopy (XPS) analysis of a surface of a positive electrode of Example 10;

FIG. 6 is a graph of voltage (volts versus lithium, V vs. Li/Li$^+$) versus specific capacity (milliampere hours per gram, mAh·g$^{-1}$) showing specific capacity when discharged at a 2C rate of each of Examples 22, 31, and 32 and Comparative Examples 12, 15, and 16; and

FIG. 7 is a graph of specific capacity (milliampere hours per gram, mAh·g$^{-1}$) versus cycle number showing a lifespan of a lithium battery of each of Example 31 and Comparative Example 15.

DETAILED DESCRIPTION OF THE EMBODIMENTS

Reference will now be made in detail to embodiments, examples of which are illustrated in the accompanying drawings, wherein like reference numerals refer to like elements throughout. In this regard, the present embodiments may have different forms and should not be construed as being limited to the descriptions set forth herein. Accordingly, the embodiments are merely described below, by referring to the figures, to explain aspects of the present description.

It will be understood that when an element is referred to as being "on" another element, it can be directly on the other element or intervening elements may be present therebetween. In contrast, when an element is referred to as being "directly on" another element, there are no intervening elements present.

It will be understood that, although the terms "first," "second," "third" etc. may be used herein to describe various elements, components, regions, layers, and/or sections, these elements, components, regions, layers, and/or sections should not be limited by these terms. These terms are only used to distinguish one element, component, region, layer, or section from another element, component, region, layer or section. Thus, "a first element," "component," "region," "layer," or "section" discussed below could be termed a second element, component, region, layer, or section without departing from the teachings herein.

The terminology used herein is for the purpose of describing particular embodiments only and is not intended to be limiting. As used herein, the singular forms "a," "an," and "the" are intended to include the plural forms, including "at least one," unless the content clearly indicates otherwise. "Or" means "and/or." As used herein, the term "and/or" includes any and all combinations of one or more of the associated listed items. It will be further understood that the terms "comprises" and/or "comprising," or "includes" and/or "including" when used in this specification, specify the presence of stated features, regions, integers, steps, operations, elements, and/or components, but do not preclude the presence or addition of one or more other features, regions, integers, steps, operations, elements, components, and/or groups thereof.

Spatially relative terms, such as "beneath," "below," "lower," "above," "upper" and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" the other elements or features. Thus, the exemplary term "below" can encompass both an orientation of above and below. The device may be otherwise oriented (rotated 90 degrees or at other orientations) and the spatially relative descriptors used herein interpreted accordingly.

Unless otherwise defined, all terms (including technical and scientific terms) used herein have the same meaning as commonly understood by one of ordinary skill in the art to which this disclosure belongs. It will be further understood that terms, such as those defined in commonly used dictionaries, should be interpreted as having a meaning that is consistent with their meaning in the context of the relevant art and the present disclosure, and will not be interpreted in an idealized or overly formal sense unless expressly so defined herein.

Exemplary embodiments are described herein with reference to cross section illustrations that are schematic illustrations of idealized embodiments. As such, variations from the shapes of the illustrations as a result, for example, of manufacturing techniques and/or tolerances, are to be expected. Thus, embodiments described herein should not be construed as limited to the particular shapes of regions as illustrated herein but are to include deviations in shapes that result, for example, from manufacturing. For example, a region illustrated or described as flat may, typically, have rough and/or nonlinear features. Moreover, sharp angles that are illustrated may be rounded. Thus, the regions illustrated in the figures are schematic in nature and their shapes are not intended to illustrate the precise shape of a region and are not intended to limit the scope of the present claims.

A driving voltage of a positive active material means a discharge voltage versus lithium when the positive active material is at least 95% charged.

A C rate means a current which will discharge a battery in one hour, e.g., a C rate for a battery having a discharge capacity of 1.6 ampere-hours would be 1.6 amperes.

Coating a surface of a positive electrode with a coating material is a method of modifying the positive active material to improve battery performance. Examples of the coating material can include a metal oxide or a metal fluoride, such as aluminum oxide ($Al_2O_3$), magnesium oxide (MgO), zinc oxide (ZnO), aluminum fluoride ($AlF_3$), zinc fluoride ($ZnF_2$), or magnesium fluoride ($MgF_2$). While not wanting to be bound by theory, it is understood that the coating material, when disposed on a surface of a positive electrode, prevents undesirable side reactions due to electron transfer by directly contacting an electrolyte on the surface of the positive electrode, and removing by-products that are produced in a battery during charge and/or discharge which can reduce the performance of the battery.

Further, some coatings can also increase an electrical conductivity of the positive active material. A carbon coating material can be used, however oxide positive active materials, other than phosphate positive active materials such as those having an olivine structure, are difficult to coat with carbon. While not wanting to be bound by theory, it is understood that the reason it is difficult to coat oxides with carbon is that $CO_2$ is generated during carbonization, instead of providing the desired carbon coating.

In addition, high-voltage positive active materials are actively being studied to provide improved energy density. Accordingly, a coating material which can suppress oxidation of a surface of a positive active material when contacted with an electrolyte at a high-voltage would be desirable.

Also, as more lithium is included in a positive active material, an electrical conductivity of the positive active material is reduced, and a temperature of a battery may be easily increased when the battery is charged and/or discharged, especially when charged and/or discharged at a high rate. Thus, a coating material that provides improved electrical conductivity and facilitates operation of the battery even after high rate charge/discharge would be desirable.

A positive active material having an improved content of lithium would be desirable to provide a higher capacity lithium battery, and a higher voltage positive active material would be desirable to provide higher energy density.

However, when a content of lithium is increased or a higher voltage used, the lifespan of the lithium battery and an amount of energy stored in the lithium battery are often reduced. Also, an electrical conductivity of the positive active material having an increased lithium content can be reduced, and thus a charge/discharge rate capability and a lifespan of the lithium battery can be reduced.

Accordingly, a positive active material that provides improved charge/discharge rate capability, improved lifespan, and increased electrical conductivity, would be desirable.

A positive active material including a carbon material on a surface of the positive active material, for example a positive active material coated with an amorphous carbon, has received attention. The carbon material may be coated on a surface of a positive active material by mixing a carbon precursor with a positive active material and heat treating the mixture.

However, and while not wanting to be bound by theory, it is understood that when such a carbon material is heat treated with an oxide-based positive active material, a capacity of the lithium battery is decreased because oxygen deintercalation of the positive active material occurs, and thus the desired coating of the carbon material on the surface of the positive active material is not readily formed. Also, when a crystalline carbon material with a greater electrical conductivity is used, a higher heat treating temperature may be used in order to coat the positive active material with the crystalline carbon material, and accordingly a capacity of the lithium battery deteriorates when oxygen is deintercalated from the positive electrode. Thus a suitable coating of the carbon material on the surface of the positive active material is difficult to form.

According to an embodiment, a positive active material including a lithium transition metal oxide with a layered or spinel structure and carbon nanotubes (CNTs) on a surface of the lithium transition metal oxide is provided.

The positive active material is a lithium transition metal oxide with a layered or spinel structure that is heat-treated in an oxygen atmosphere, and is not a phosphate-based positive active material, such as a phosphate-based positive active material having an olivine-type structure. The positive active material includes CNTs on the surface of the lithium transition metal oxide. While not wanting to be bound by theory, it is understood that the electrical conductivity of the positive active material may be improved by the CNTs, and further the charge/discharge rate capability and lifespan of the lithium battery may be improved.

Other carbon materials, such as fullerene (e.g., C60), a carbon nanopowder, or a carbon nanofiber, and the like, have an electrical conductivity which is less than that of CNTs. Because carbon materials such as fullerene, carbon nanopowder, and carbon nanofiber have lower electrical conductivity, use of such lower conductivity materials may result in reduced charge/discharge rate capability and lifespan of the lithium battery.

An average aspect ratio of the CNTs may be 50 or less, for example, 20 or less, or 10 or less. An average aspect ratio of the CNTs may be about 1 to about 500, for example, about 2 to about 400, specifically about 4 to about 300, or about 6 to about 300. The term "average aspect ratio" as used herein refers to a ratio of an average length to an average diameter. The "average diameter" is an average value of the largest diameters of 10 or more CNTs in an image that is magnified 50,000 times or greater using a scanning electron microscope (SEM), and the "average length" is an average value of lengths of 10 or more CNTs in an image that is magnified 50,000 times or greater using a SEM.

The positive active material includes the CNTs having an average aspect ratio within the above range on the surface of the positive active material, and thus an electrical conductivity may be improved, and side reactions on a surface of a positive electrode may be suppressed or effectively eliminated. Accordingly, the charge/discharge rate capability and lifespan of a lithium battery including the positive active material may be further improved.

An average diameter of the CNTs may be from about 1 nanometer (nm) to about 50 nm, for example, from about 2 nm to about 50 nm, specifically about 4 nm to about 40 nm. The CNTs having an average diameter within the range above may be suitably dispersable and may be suitably disposed on the surface of the lithium transition metal oxide, and thus an electrical conductivity of the positive active material may be improved.

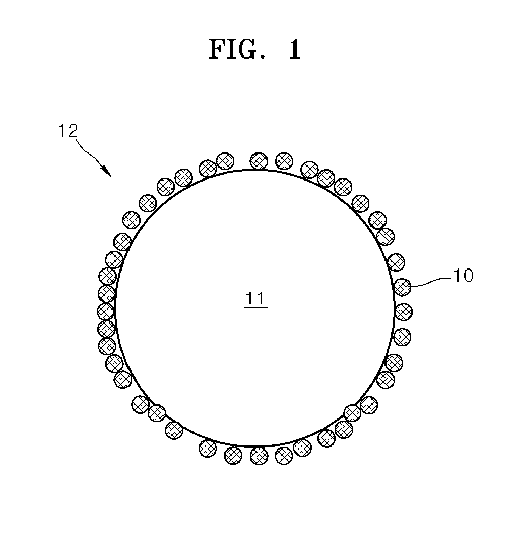

FIG. 1 is a schematic view of an embodiment of a positive active material. Referring to FIG. 1, CNTs 10 are disposed (e.g., coated) regularly or irregularly on a surface of a lithium transition metal oxide 11 to provide a positive active material 12.

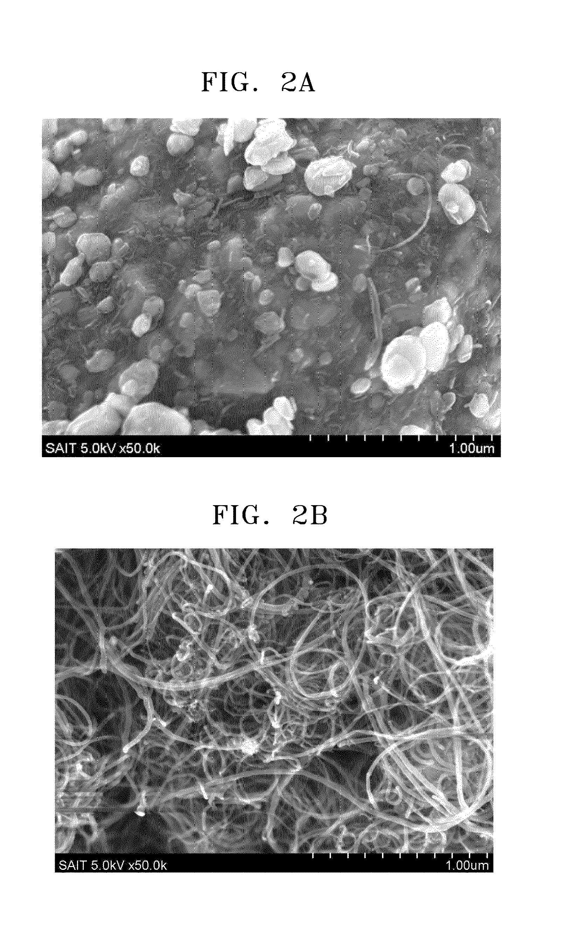

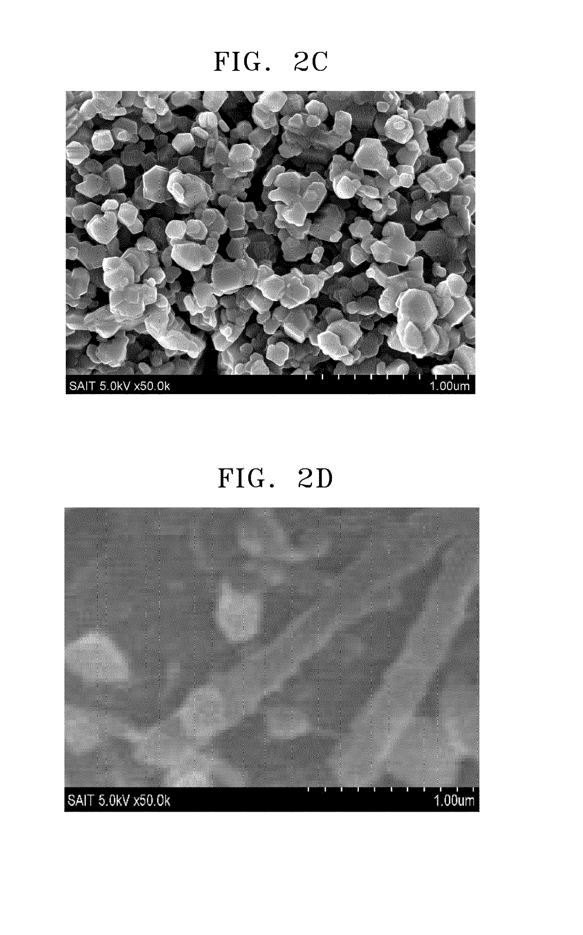

FIGS. 2A and 2B are SEM images (at 50,000x magnification) of positive active materials according to Examples 1 and 6, respectively. FIG. 2C is a SEM image (50,000x magnification) of a positive active material of Comparative Example 1.

Referring to FIGS. 2A and 2B, particles of nano-sized CNTs are disposed and coated on surfaces of primary particles of the lithium transition metal oxide, and on surfaces between the neighboring primary particles. The primary particles agglomerate to form secondary particles. An average particle diameter of the primary particles may be 1 micrometer ($\mu$m) or less, for example, from about 0.1 nm to about 500 nm. In an embodiment, the average primary particle diameter may be about 0.1 nm to about 1 $\mu$m, specifically about 1 nm to about 200 nm, more specifically about 2 nm to about 50 nm. When an average particle diameter of the primary particles is within this range, side reactions with an electrolyte may be reduced, and thus electrochemical characteristics of the positive active material may be effectively improved. In an embodiment, the average secondary particle diameter may be about 1 nm to about 10 $\mu$m, specifically about 2 nm to about 5 $\mu$m, more specifically about 4 nm to about 1 $\mu$m.

The CNTs may be single-walled CNTs, multi-walled CNTs, or a combination thereof. The CNTs may be straight, branched, or a combination thereof.

A $I_D/I_G$ ratio of the single-walled CNTs, when determined by Raman spectroscopy with a laser at a wavelength of 514.5 nm, may be from about 1.0 to about 2.0, wherein the $I_D/I_G$ ratio is a ratio of a maximum peak intensity of a D band between about 1340 inverse centimeters ($cm^{-1}$) and about 1360 $cm^{-1}$ to a maximum peak intensity of a G band between about 1575 $cm^{-1}$ and about 1600 $cm^{-1}$. For example, a $I_D/I_G$ ratio of the single-walled CNTs, when determined by Raman spectroscopy with a laser at a wavelength of 514.5 nm, may be from about 1.0 to about 1.5, for example, from about 1.0 to about 1.3.

A $I_D/I_G$ ratio of the multi-walled CNTs, when determined by Raman spectroscopy with a laser at a wavelength of 514.5 nm, may be from about 0.1 to about 1.0, wherein the $I_D/I_G$ ratio is a ratio of the maximum peak intensity of a D band between about 1340 $cm^{-1}$ and about 1360 $cm^{-1}$ to the maximum peak intensity of a G band between about 1575 $cm^{-1}$ and about 1600 $cm^{-1}$. For example, a $I_D/I_G$ ratio of the multi-walled CNTs, when determined by Raman spectroscopy with a laser at a wavelength of 514.5 nm, may be from about 0.1 to about 0.9, for example, from about 0.1 to about 0.8.

The G band between about 1575 $cm^{-1}$ and about 1600 $cm^{-1}$ in a Raman spectrum is a band that appears as carbon atoms vibrate along a tangential direction of the CNTs and is understood to indicate a $sp^2$ bond. The D band between about 1340 $cm^{-1}$ and about 1360 $cm^{-1}$ in a Raman spectrum is understood to indicate a $sp^3$ bond and an intensity thereof increases when atomic bonds composed of $sp^2$ bonds are broken and form $sp^3$ bonds.

In the Raman spectrum of the CNTs, it is understood that the D band increases when disorders or defects occur in the CNTs, and thus a degree of the disorder or defect occurrence may be quantitatively measured by calculating a ratio of the maximum peak intensity of the D band to the maximum peak intensity of the G band ($I_D/I_G$).

A portion of the CNTs may be amorphous. In an embodiment, the amorphous portion of the CNTs may be provided by amorphizing CNTs.

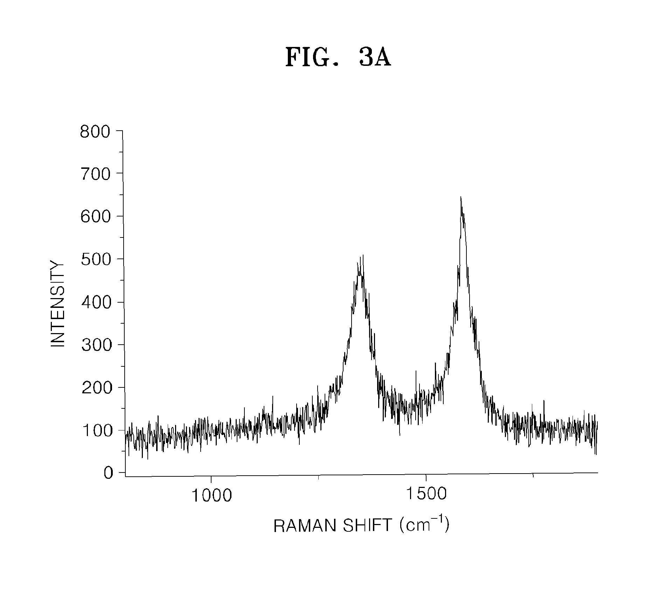

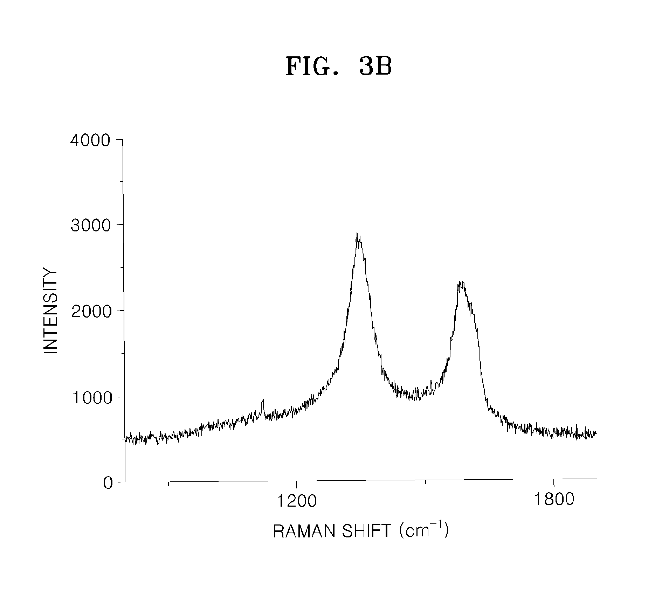

For example, the maximum peak intensity of the G band and the maximum peak intensity of the D band of the CNTs on surfaces of the positive active materials of Examples 1 and 6 is shown in FIGS. 3A and 3B respectively, which are Raman spectra of the CNTs on surfaces of the positive active materials of Examples 1 and 6, respectively. A degree of disorder or defect occurrence may be quantitatively measured by calculating a ratio of the maximum peak intensity of the D band to the maximum peak intensity of the G band ($I_D/I_G$).

A content of the CNTs may be from about 0.01 parts to about 15 parts by weight, based on 100 parts by weight of the lithium transition metal oxide. For example, a content of the CNTs may be from about 0.01 parts to about 10 parts by weight, for example, from about 0.05 parts to about 5 parts by weight, specifically about 0.1 parts to about 3 parts by weight, based on 100 parts by weight of the lithium transition metal oxide.

Even when a small amount of the CNTs is included on the surface of the lithium transition metal oxide, the electrical conductivity of the positive active material may be improved. That is, when the content of the CNTs is less than the above range, the improvement in the electrical conductivity of the positive active material may be insignificant, and when the content of the CNTs is larger than the above ranges, the additional improvement in the electrical conductivity may be insignificant beyond that provided by a content within the foregoing range. While not wanting to be bound by theory, it is understood that the insignificant additional improvement in the electrical conductivity may be because the surface of the lithium transition metal oxide is completely covered with the CNTs.

The lithium transition metal oxide may be represented by Chemical Formulas 1 through 4, or a combination thereof.

$$xLi[Li_{1/3}Me_{2/3}]O_2-(1-x)LiMe'O_2 \qquad \text{Chemical Formula 1}$$

In Chemical Formula 1, $0 < x < 0.9$, Me is Mn, Mo, W, V, Ti, Zr, Ru, Rh, Pd, Os, Ir, Pt, or a combination thereof, and Me' is Ni, Mn, Co, or a combination thereof.

$$yLi[Li_{1/3}((M1)_a(M2)_b (Mn)_c)_{2/3}]O_2-(1-y)LiMe'O_2 \qquad \text{Chemical Formula 2}$$

In Chemical Formula 2, $0 \leq a \leq 1/3$, $0 \leq b \leq 1/3$, $a+b+c=1$, $0 < y < 0.9$, M1 is Ni, Cu, Zn, Co, Cr, Fe, Mg, or a combination thereof, M2 is Mo, W, V, Ti, Zr, Ru, Rh, Pd, Os, Ir, Pt, or a combination thereof, and Me' is Ni, Mn, Co, or a combination thereof.

$$Li_dCo_{1-e-g} Ni_e(M3)_gO_{2-j}(X1)_j \qquad \text{Chemical Formula 3}$$

In Chemical Formula 3, $0.8 < d \leq 1.6$, $0 \leq e \leq 1$, $0 \leq g \leq 0.5$, $0 \leq j \leq 1$, M3 is Mn, Ni, Co, Cu, Mg, Na, Ca, Ti, Zn, Ga, Ge, Al, Cr, Mg, Sr, Mo, W, V, Ti, Zr, Ru, Rh, Pd, Os, Ir, Ag, Au, Hf, Sn, Pt, or a combination thereof, and X1 is O, F, S, P, or a combination thereof.

$$Li_pMn_{2-q}(m4)_qO_{4-t}(X2)_t \qquad \text{Chemical Formula 4}$$

In Chemical Formula 4, $0.8 < p \leq 1.6$, $0 \leq q \leq 1$, $0 \leq t \leq 1$, M4 is Mn, Ni, Co, Cu, Mg, Na, Ca, Ti, Zn, Ga, Ge, Al, Cr, Mg, Sr, Mo, W, V, Ti, Zr, Ru, Rh, Pd, Os, Ir, Ag, Au, Hf, Sn, Pt, or a combination thereof, and X2 is O, F, S, P, or a combination thereof.

The positive active material is a lithium transition metal oxide with a layered or spinel structure. The lithium transition metal oxide may be heat-treated in an oxygen atmosphere. The positive active material is a lithium transition metal oxide with a layered or spinel structure and is distinct from a phosphate-based positive active material, such as a phosphate-based positive active material having an olivine structure.

The lithium transition metal oxide may be a lithium transition metal oxide including manganese (Mn). For example, the lithium transition metal oxide may be a lithium manganese oxide, a lithium nickel manganese oxide, or a lithium nickel manganese cobalt oxide, or a lithium-rich lithium manganese oxide.

While not wanting to be bound by theory, it is understood that in use, the electrolyte may be decomposed at a surface of the lithium transition metal oxide at a high voltage, e.g. when in a charged state, and elution of a transition metal, such as manganese, may readily occur such that the transition metal in the lithium transition metal oxide is dissolved by the electrolyte. Therefore, due to such side reactions, when at a high temperature, the lithium battery may be easily self-discharged, and when the lithium battery is charged and discharged at a high temperature, a capacity of the lithium battery may be reduced.

CNTs disposed on a surface of the lithium transition metal oxide are understood to prevent, reduce, or effectively eliminate undesired reaction of the positive active material and the electrolyte, e.g., effectively preventing or substantially eliminating transition metal elution. Therefore, decomposition resulting from an undesired reaction of the positive active material and the electrolyte when at a high voltage and/or a high temperature may be prevented or effectively eliminated, and a charge/discharge rate capability and lifespan may be improved by including the CNTs on the surface of the lithium transition metal oxide.

According to another embodiment, a method of preparing a positive active material includes disposing, e.g., forming, CNTs on a surface of a lithium transition metal oxide with a layered or spinel structure using a physical or chemical surface treatment method.

The CNTs may be disposed on the lithium transition metal oxide using any suitable physical or chemical surface treatment method that is available. For example, a physical vapor deposition (PVD) method, a chemical vapor deposition (CVD) method, a high-temperature sintering process, a surface modification method, a dry surface treatment method, or a wet surface treatment method may be used.

Among the above methods, the CNTs may be disposed on the lithium transition metal oxide using, for example, a dry surface treatment method in order to increase an electrical conductivity of the positive active material, and to further improve the charge/discharge rate capability and lifespan of a lithium battery including the positive active material.

In general, a wet surface treatment method may be used to homogeneously disperse a carbon material on a surface of a lithium transition metal oxide. The wet surface treatment method may include dispersing the carbon material to prepare a dispersion or suspension, or preparing an organic or aqueous solution comprising the carbon material, spraying the organic or aqueous solution with the carbon material on a surface of a positive active material, or impregnating the positive active material in the prepared organic or aqueous solution, and drying the positive active material, thereby coating the carbon material on the surface of the lithium transition metal oxide.

However, when a wet surface treatment method is used as a method of preparing a positive active material, a conductive passivation layer in the form of a lithium salt formed on a surface of the positive active material may be removed, and thus the electrical conductivity of the positive active material may be decreased, and additional drying and grinding may be called for. Therefore, a dry surface treatment method may be used as a method of preparing the positive active material in order to increase the electrical conductivity of the positive active material and to further improve the charge/discharge rate capability and lifespan of a lithium battery including the positive active material.

The dry surface treatment method includes coating CNTs on a surface of a lithium transition metal oxide using a mechanical method by applying a shear force, a cohesive force, or a compressive force using a dry surface treatment device. Representative devices for the dry surface treatment include a NOBILTA (available from Hosokawa Micron, e.g., a Hosokawha NOBILTA NOB-130) or a Mechano Fusion device (also available from Hosokawha, e.g., a Hosokawha Mechanofusion AMS). The device is not limited thereto, and any suitable mechanical dry surface treatment device may be used.

The dry surface treatment method according to an embodiment may include contacting, e.g., mixing, a lithium transition metal oxide and CNTs, and rotating the mixture using a dry surface treatment device for an appropriate period of time at an appropriate speed, to suitably dispose the CNTs on a surface of the lithium transition metal oxide.

The dry surface treatment device may provide CNTs having an average aspect ratio within a selected range on the lithium transition metal oxide by appropriately controlling factors such as a number of rotations, an amount of an added sample, and a reactor size. For example, CNTs with an average aspect ratio of 50 or less may be prepared.

The method of preparing the positive active material may optionally further comprise an additional heat treating process after the disposing of the CNTs. If desired, the heat treatment process may be performed after completing the disposing of the CNTs on the lithium transition metal oxide. Additional desirable effects, such as increasing an adhesive strength between the CNTs and the lithium transition metal oxide, and removing impurities may be obtained through the heat treatment process.

An average aspect ratio of the CNTs may be 50 or less, for example, 20 or less. An average aspect ratio of the CNTs may be, for example, 10 or less. The CNTs having an average aspect ratio within this range may be readily provided on the surface of the positive active material using the method of preparing the positive active material, and thus the electrical conductivity of the positive active material may be improved, and the charge/discharge rate capability and lifespan of the lithium battery including the positive active material may be improved by suppressing a side reaction at a surface of a positive electrode.

According to another embodiment, a lithium battery includes a positive electrode; an electrolyte; and a negative electrode, wherein the positive electrode includes the positive active material described above. An electrical conductivity of the positive electrode may be about 5 to about 400 millisiemens per centimeter (mS/cm), specifically about 10 to about 300 mS/cm, more specifically about 15 to about 200 mS/cm.

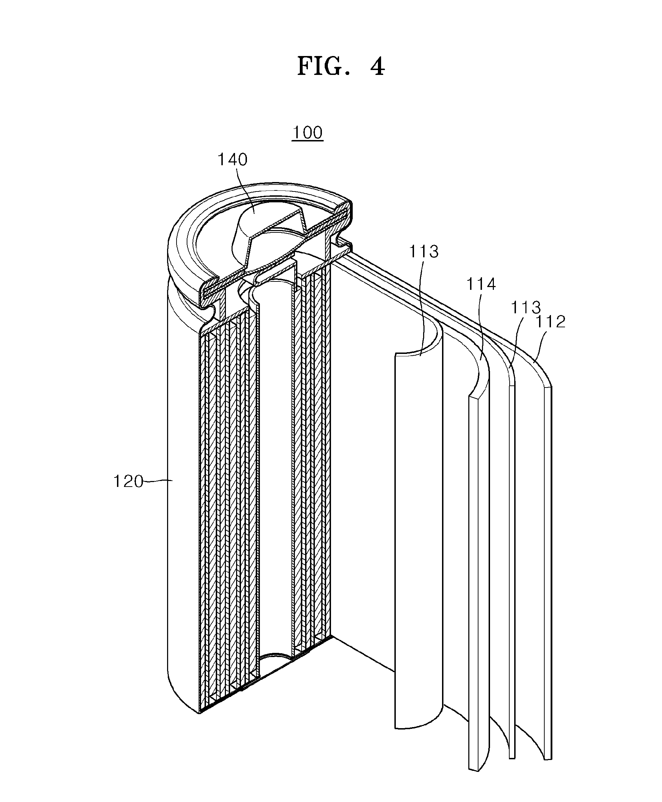

FIG. 4 is a disassembled cross-section schematic view of an embodiment of a lithium battery. Although the lithium battery shown in FIG. 4 is cylindrical, the lithium battery may be prismatic or pouch-like, and the structure of the lithium battery is not limited thereto.

The lithium battery may be a lithium primary battery or a lithium secondary battery.

A lithium secondary battery may be classified as a lithium ion battery, a lithium ion polymer battery, or a lithium polymer battery according to a type of a separator and an electrolyte used in the battery, and as a cylindrical type, a prismatic type, a coin type, or a pouch type, or the like, according to a shape of the battery, or as a bulk type and a thin film type according to a size of the battery. A shape of the lithium battery, particularly the lithium secondary battery, according to an embodiment is not limited, and a structure and a method of preparing the lithium battery may be determined by one of skill in the art without undue experimentation, and thus a detailed description thereof will be omitted.

Referring to FIG. 4, a lithium secondary battery 100 has a cylindrical shape and includes a negative electrode 112, a positive electrode 114, a separator 113 disposed between the negative electrode 112 and the positive electrode 114, and an electrolyte (not shown) impregnated in the negative electrode 112, the positive electrode 114, and the separator 113. The lithium secondary battery 100 also has a battery case 120, and a seal member 140 sealing the battery case 120. The lithium secondary battery 100 may be manufactured by sequentially stacking the negative electrode 112, the positive electrode 114, and the separator 113 to form a spiral wound structure, and disposing the spiral wound structure in the battery case 120.

The negative electrode 112 includes a current collector and a negative active material layer formed on the current collector, wherein the negative active material layer includes a negative active material.

The current collector used in the negative electrode may comprise a copper, nickel, or a stainless steel (SUS) current collector, depending on a voltage range, and, for example, a copper current collector may be used.

The negative active material may be any suitable material that is used in the art. In greater detail, the negative active material may be lithium metal, a metal which is alloyable with lithium, a transition metal oxide, a material that may dope or undope lithium, or a material capable of reversibly intercalating and deintercalating lithium ions, but the negative active material is not limited thereto.

Examples of the transition metal oxide include a vanadium oxide, a lithium vanadium oxide, or the like. Examples of the material that may dope or undope lithium include Si, $SiO_x$ (wherein $0 < x < 2$), a Si-Y alloy (where Y is an alkaline metal, an alkaline earth metal, a Group 13 element, a Group 14 element, a transition metal, a rare earth element, or a combination thereof other than Si), Sn, $SnO_2$, a Sn-Y alloy (where Y is an alkaline metal, an alkaline earth metal, a Group 13 element, a Group 14 element, a transition metal, a rare earth element, or a combination thereof other than Sn), or a combination thereof and $SiO_2$. Examples of the element Y include Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ti, Ge, P, As, Sb, Bi, S, Se, Te, Po, or a combination thereof.

The material capable of reversibly intercalating and deintercalating lithium ions may be a carbonaceous material, and may be any carbonaceous negative active material suitable for use in a lithium ion secondary battery. Examples of the material capable of reversibly intercalating and deintercalating lithium ions include a crystalline carbon, an amorphous carbon, and a combination thereof. The crystalline carbon may be graphite, and a shape of the crystalline carbon may be plate-like, flake, spherical, or fibrous. The crystalline carbon may be natural graphite or artificial graphite, and the amorphous carbon may be a soft carbon (e.g., a low-temperature fired carbon) or a hard carbon, mesophase pitch carbide, fired coke, or the like.

Also, the negative active material layer includes a binder and may further include a conductive agent.

The binder satisfactorily adheres particles of the negative active material to each other, and also the negative active material to the current collector. Examples of the binder include polyvinyl alcohol, carboxymethyl cellulose, hydroxypropyl cellulose, diacetylcellulose, polyvinylchloride, carboxylated polyvinylchloride, polyvinyl fluoride, polymer including ethylene oxide, polyvinylpyrrolidone, polyurethane, polytetrafluoroethylene, polyvinylidene fluoride, polyethylene, polypropylene, styrene-butadiene rubber, acrylated styrene-butadiene rubber, epoxy resin, and nylon, but not limited thereto.

The conductive agent provides improved conductivity to the electrode. The conductive agent may be any suitable electrically conductive material that does not substantially cause an undesirable chemical change in the lithium secondary battery. Examples of the conductive agent include natural graphite; artificial graphite; carbon black; acetylene black; Ketjen black; carbon fiber; a powdered metal such as copper, nickel, aluminum, or silver; metal fiber; or an organic compound such as polyphenylene. A combination comprising at least one of the foregoing can be used. The current collector may be a copper foil, a nickel foil, a stainless steel foil, a titanium foil, nickel foam, copper foam, a polymer substrate coated with a conductive metal, or a combination thereof.

Amounts of the negative active material, the binder, and the conducting agent may be determined by one of skill in the art without undue experimentation. For example, a weight ratio of a weight of the negative active material with respect to a combined weight of the conducting agent and the binder may be from about 98:2 to about 92:8, wherein a mixed weight ratio of the conducting agent with respect to the binder may be from about 1:1.5 to about 1:3, but the weight ratios are not limited thereto.

The positive electrode 114 includes a current collector and a positive active material layer disposed on the current collector.

The current collector may be aluminum (Al), but is not limited thereto.

A positive active material of the positive active material layer includes a lithium transition metal oxide with a layered or spinel structure and CNTs on a surface of the lithium transition metal oxide. While not wanting to be bound by theory, it is understood that because the positive active material includes CNTs on the surface of the lithium transition metal oxide, an electrical conductivity of the positive active material is increased, and the charge/discharge rate capability and lifespan of the lithium battery is improved.

An average aspect ratio of the CNTs may be 50 or less, for example, 20 or less, or 10 or less.

The CNTs having an average aspect ratio within this range increases an electrical conductivity of the positive active material and further improves the charge/discharge rate capability and lifespan of a lithium battery including the positive active material.

The CNTs are further disclosed above and thus further description thereof is omitted for clarity.

A portion of the CNTs may be amorphous.

A content of the CNTs may be from about 0.01 part to about 15 parts by weight, based on 100 parts by weight of the lithium transition metal oxide. For example, a content of the CNTs may be from about 0.01 part to about 10 parts by weight, for example, from about 0.01 part to about 5 parts by weight, based on 100 parts by weight of the lithium transition metal.

While not wanting to be bound by theory, it is understood that the CNTs form a coating layer on the surface of the lithium transition metal oxide, and a thickness of the coating layer is proportional to a time taken to form the coating layer. The thickness of the layer of CNTs on the surface of the lithium transition metal oxide may be from about 1 nm to about 100 nm, for example from about 1 nm to about 50 nm, specifically about 2 nm to about 45 nm.

A process of forming the coating layer including the CNTs on a surface of the lithium transition metal oxide may be performed using any suitable physical or chemical surface treatment method as mentioned above. For example, the coating layer may be formed on the surface of the lithium transition metal oxide using a dry surface treatment method.

The lithium transition metal oxide may be a lithium transition metal oxide represented by Chemical Formulas 1 through 4, or a combination thereof, as is further disclosed above.

A driving voltage of the positive active material may be 4.3 ± 0.1 V or greater. The positive active material may be a high voltage positive active material.

The positive active material layer of the positive electrode may further include a conductive agent.

The conductive agent provides improved conductivity to the electrode. The conductive agent may be any suitable electrically conductive material that does not substantially cause an undesirable chemical change in the lithium secondary battery. Examples of the conductive agent include natural graphite; artificial graphite; carbon black; acetylene black; Ketjen black; carbon fiber; a powdered metal such as copper, nickel, aluminum, or silver; metal fiber; or an organic compound such as polyphenylene. A combination comprising at least one of the foregoing can be used.

An amount of the conductive agent may be from about 0.1 parts to about 10 parts, by weight, for example, from 0.1 parts to about 7 parts by weight, based on 100 parts by weight of the positive electrode.

A carbon concentration on a surface of the positive electrode 114, when measured using a X-ray photoelectron spectroscopy (XPS), may be about 20 atomic percent (atom%, or at%) or greater, for example, from about 20 at% to about 100 at%, or from about 20 at% to about 99.99 at%.

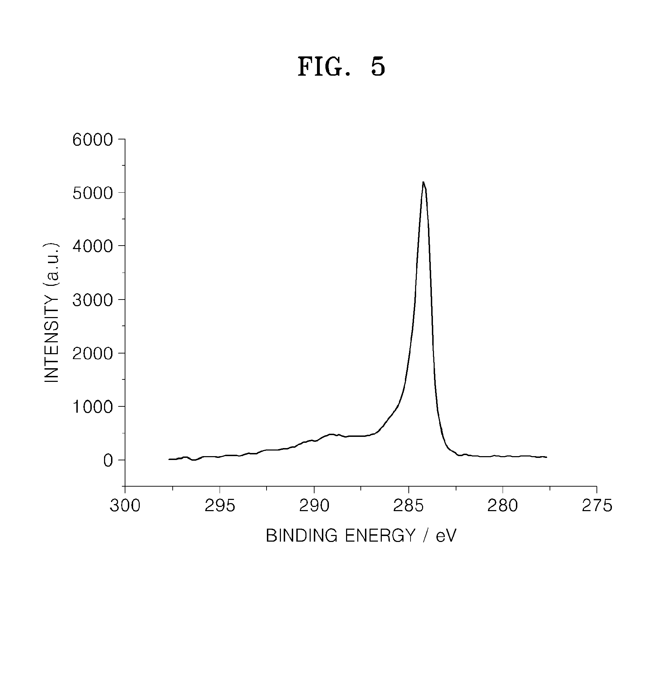

The carbon concentration on the surface of the positive electrode 114 may be determined using XPS. FIG. 5 is an XPS spectrum of a C1s valence band of a surface of a positive electrode according to Example 10. Alternatively, the carbon concentration on the surface of the positive electrode may be determined using energy dispersive analysis of X-rays (EDAX, i.e., energy-dispersive X-ray spectroscopy), which will be described in further detail below. Accordingly, an electrical conductivity of the positive electrode may be improved.

Also, the positive active material layer may include a binder.

The binder satisfactorily adheres particles of the positive active material to each other and also serves to attach the positive active material to the current collector. Examples of the binder include polyvinyl alcohol, carboxymethyl cellulose, hydroxypropyl cellulose, diacetylcellulose, polyvinylchloride, carboxylated polyvinylchloride, polyvinyl fluoride, polymer including ethylene oxide, polyvinylpyrrolidone, polyurethane, polytetrafluoroethylene, polyvinylidene fluoride, polyethylene, polypropylene, styrene-butadiene rubber, acrylated styrene-butadiene rubber, epoxy resin, and nylon, but are not limited thereto.

The negative electrode 112 and the positive electrode 114 are manufactured by mixing an active material, a binder, and a conductive material in a solvent to prepare an active material composition and coating the composition on a current collector. Additional details of the method of preparing the positive and negative electrodes 112 and 114 may be determined by one of skill in the art without undue experimentation, and thus a further detailed description thereof will be omitted here. The solvent may be N-methylpyrrolidone or the like, but is not limited thereto.

A plasticizer may be further added to the composition for forming the positive active material layer or the negative active material layer to form pores on an electrode plate.

The electrolyte may include a non-aqueous organic solvent and a lithium salt.

The non-aqueous organic solvent may serve as a medium in which ions involved in an electrochemical reaction of a battery may transfer therethrough.

The non-aqueous organic solvent may be a carbonate-based, ester-based, ether-based, ketone-based, alcohol-based, or aprotic solvent. Examples of the carbonate-based solvent include dimethyl carbonate (DMC), diethyl carbonate (DEC), di-n-propyl carbonate (DPC), methyl-n-propyl carbonate (MPC), ethyl n-propyl carbonate (EPC), ethylmethyl carbonate (EMC), ethylene carbonate (EC), propylene carbonate (PC), butylene carbonate (BC), and examples of the ester-based solvent include methyl acetate, ethyl acetate, n-propyl acetate, dimethyl acetate, methyl n-propionate, ethyl n-propionate, γ-butyrolactone, 5-decanolide, γ-valerolactone, *dl*-mevalonolactone, ε-caprolactone, or the like. Examples of the ether-based solvent may include dibutyl ether, tetraglyme, diglyme, dimethoxyethane, 2-methyltetrahydrofuran, tetrahydrofuran, or the like, and examples of the ketone-based solvent may include cyclohexanone or the like. Examples of the alcohol-based solvent may include ethanol, isopropyl alcohol, and so on, and examples of the aprotic solvent may include nitriles such as R-CN (wherein R is a $C_2$ to $C_{20}$ linear, branched, or cyclic hydrocarbon comprising a double bond, an aromatic ring, an ether bond, or a combination thereof), amides such as dimethylformamide, dioxolanes such as 1,3-dioxolane, sulfolanes, and the like.

The non-aqueous organic solvent may be used singularly or as a mixture. When the organic solvent is used as a mixture, the mixture weight ratio may be selected in accordance with desirable battery performance.

The lithium salt is dissolved in an organic solvent. Examples of the lithium salt include $LiPF_6$, $LiBF_4$, $LiSbF_6$, $LiAsF_6$, $LiN(SO_2C_2F_5)_2$, $Li(CF_3SO_2)_2N$, $LiC_4F_9SO_3$, $LiClO_4$, $LiAlO_2$, $LiAlCl_4$, $LiN(C_xF_{2x+1}SO_2)(C_yF_{2y+1}SO_2)$ (where x and y are natural numbers), LiCl, LiI, $LiB(C_2O_4)_2$ (lithium bis(oxalate) borate, LiBOB), or a combination thereof. The lithium salt may be used in a concentration in a range from about 0.1 M to about 2.0 M. When the lithium salt is within this concentration range, an electrolyte may provide suitable performance and lithium ion mobility may be enhanced because the electrolyte has suitable electrical conductivity and viscosity.

The secondary lithium battery may further include a separator between the negative and positive electrodes, if desired. Examples of a suitable separator include polyethylene, polypropylene, polyvinylidene fluoride, and two or greater multi-layers thereof. Examples of the separator may be a polyethylene/polypropylene double-layered separator, a polyethylene/polypropylene/polyethylene triple-layered separator, and a polypropylene/polyethylene/polypropylene triple-layered separator.

The following examples illustrate the present embodiments in more detail. However, it will be understood that the present embodiments are not limited by these examples.

Examples

(Preparation of Positive Active Material)

Example 1: Positive active material including single-walled CNTs coated on lithium transition metal oxide

A 2 molar (M) nickel sulfate aqueous solution ($NiSO_4$.6$(H_2O)$, available from Aldrich), a 2 M cobalt sulfate aqueous solution ($CoSO_4$·7$(H_2O)$, available from Aldrich), and a 2 M manganese sulfate aqueous solution ($MnSO_4$·$(H_2O)_x$, available from Aldrich) were prepared, respectively. Then, a mixture was prepared by mixing the nickel sulfate aqueous solution, the cobalt sulfate aqueous solution, and the manganese sulfate aqueous solution to provide nickel: cobalt: manganese in a mole ratio of 0.17:0.1:0.56. The mixture and a 2 M $Na_2CO_3$ aqueous solution were added to 4 liters (L) of a 0.2 M $NH_4OH$ solution at a rate of 3 milliliters per minute (mL/min) to maintain a pH of 8 for 10 hours, and then a precipitate obtained therefrom was filtered. The precipitate was washed with water and dried. Then, the precipitate was mixed with $Li_2CO_3$ (available from Aldrich) to provide Li:Ni:Co:Mn in a mole ratio of 1.18:0.17:0.1:0.56 and heat-treated at 950°C in an air atmosphere for 5 hours, thereby obtaining a lithium transition metal oxide ($Li_{1.18}Ni_{0.17}CO_{0.1}Mn_{0.56}O_2$) with a layered structure.

Then, 2 parts by weight of single-walled CNTs (with a purity of 90% or greater, an average diameter of from about 1 nm to about 2 nm, and an average length from about 3 $\mu$m to about 30 $\mu$m, available from ENanotec) based on 100 parts by weight of the lithium transition metal oxide, was mixed with the lithium transition metal oxide ($Li_{1.18}Ni_{0.17}CO_{0.1}Mn_{0.56}O_2$) with a layered structure to form a mixture. The mixture was performed by a dry surface treatment using Nobilta device (model: NOB-MINI, available from Hosokawa) at 3000 revolutions per minute (RPM) for 20 min, thereby obtaining a positive active material including single-walled CNTs coated on a lithium transition metal oxide with a layered structure. The coated single-walled CNTs have an average length of 40 nm and an average aspect ratio of 20.

Example 2: Positive active material including single-walled CNTs coated on lithium transition metal oxide

A positive active material including single-walled CNTs coated on lithium transition metal oxide was obtained in the same manner as in Example 1, except that a mixture of the lithium transition metal oxide ($Li_{1.18}Ni_{0.17}Co_{0.1}Mn_{0.56}O_2$) with a layered structure and 5 parts by weight of single-walled CNTs (with a purity of 90% or greater, an average diameter of from about 1 nm to about 2 nm, and an average length from about 3 $\mu$m to about 30 $\mu$m, available from ENanotec), based on 100 parts by weight of the lithium transition metal oxide, was used instead of the mixture of the lithium transition metal oxide ($Li_{1.18}Ni_{0.17}Co_{0.1}Mn_{0.56}O_2$) with a layered structure and 2 parts by weight of single-walled CNTs (with a purity of 90% or greater, an average diameter of 2 nm, and an average length of 30 $\mu$m, available from ENanotec), based on 100 parts by weight of the lithium transition metal oxide. The coated single-walled CNTs have an average length of 40 nm and an average aspect ratio of 20.

Example 3: Positive active material including single-walled CNTs coated on lithium transition metal oxide

A positive active material including single-walled CNTs coated on lithium transition metal oxide, was obtained in the same manner as in Example 1, except that a mixture of the lithium transition metal oxide ($Li_{1.18}Ni_{0.17}Co_{0.1}Mn_{0.56}O_2$) with a layered structure and 0.05 parts by weight of single-walled CNTs (with a purity of 90% or greater, an average diameter of from about 1 nm to about 2 nm, and an average length from about 3 $\mu$m to about 30 $\mu$m, available from ENanotec), based on 100 parts by weight of the lithium transition metal oxide, was used instead of the mixture of the lithium transition metal oxide ($Li_{1.18}Ni_{0.17}Co_{0.1}Mn_{0.56}O_2$) with a layered structure and 2 parts by weight of single-walled CNTs (with a purity of 90% or greater, an average diameter of 2 nm, and an average length of 30 $\mu$m, available from ENanotec), based on 100 parts by weight of the lithium transition metal oxide. The coated single-walled CNTs have an average length of 40 nm and an average aspect ratio of 20.

Example 4: Positive active material including single-walled CNTs coated on lithium transition metal oxide

A positive active material including single-walled CNTs coated on lithium transition metal oxide, was obtained in the same manner as in Example 1, except that a mixture of the lithium transition metal oxide ($Li_{1.18}Ni_{0.17}Co_{0.1}Mn_{0.56}O_2$) with a layered structure and 1 part by weight of single-walled CNTs (with a purity of 90% or greater, an average diameter of from about 1 nm to about 2 nm, and an average length from about 3 $\mu$m to about 30 $\mu$m, available from ENanotec), based on 100 parts by weight of the lithium transition metal oxide, was used instead of the mixture of the lithium transition metal oxide ($Li_{1.18}Ni_{0.17}Co_{0.1}Mn_{0.56}O_2$) with a layered structure and 2 parts by weight of single-walled CNTs (with a purity of 90% or greater, an average diameter of 2 nm, and an average length of 30 $\mu$m, available from ENanotec), based on 100 parts by weight of the lithium transition metal oxide. The coated single-walled CNTs have an average length of 40 nm and an average aspect ratio of 20.

Example 5: Positive active material including single-walled CNTs coated on lithium transition metal oxide

A 2 M nickel sulfate aqueous solution ($NiSO_4 \cdot 6(H_2O)$, available from Aldrich), a 2 M cobalt sulfate aqueous solution ($CoSO_4 \cdot 7(H_2O)$, available from Aldrich), and a 2 M manganese sulfate aqueous solution ($MnSO_4 \cdot (H_2O)_x$, available from Aldrich) were prepared, respectively. Then, a mixture was prepared by mixing the nickel sulfate aqueous solution, the cobalt sulfate aqueous solution, and the manganese sulfate aqueous solution to provide nickel: cobalt: manganese in a mole ratio of 0.17:0.1:0.56. The mixture and a 2 M $Na_2CO_3$ aqueous solution were added to 4L of a 0.2 M $NH_4OH$ solution at a rate of 3 mL/min to maintain a pH of 8 for 10 hours, and then a precipitate obtained therefrom was filtered. The precipitate was washed with water and dried. Then, the precipitate was mixed with $Li_2CO_3$ (available from Aldrich) to provide Li:Ni:Co:Mn in a mole ratio of 1.18:0.17:0.1:0.56 and heat-treated at 950°C in an air atmosphere for 5 hours, thereby obtaining a lithium transition metal oxide ($Li_{1.18}Ni_{0.17}Co_{0.1}Mn_{0.56}O_2$) with a layered structure.

A dispersion was prepared by dissolving 1 gram (g) of single-walled CNTs (with a purity of 90% or greater, an average diameter of 2 nm, and an average particle diameter of from about 1 nm to about 2 nm, available from ENanotec) powder in 200 mL of acetone. 50 g of the lithium transition metal oxide ($Li_{1.18}Ni_{0.17}Co_{0.1})n_{0.56}O_2$) with a layered structure was impregnated in 200 mL of the dispersion and dried at 120°C for 24 hours, thereby obtaining positive active material including 2 parts by weight of single-walled CNTs coated on lithium transition metal oxide with a layered structure, based on 100 parts by weight of the lithium transition oxide. The coated single-walled CNTs have an average length of 400 nm and an average aspect ratio of 200.

Example 6: Positive active material including multi-walled CNTs coated on lithium transition metal oxide

A positive active material including multi-walled CNTs coated on lithium transition metal oxide was obtained in the same manner as in Example 1, except that a mixture of the lithium transition metal oxide ($Li_{1.18}Ni_{0.17}Co_{0.1}Mn_{0.56}O_2$) with a layered structure and 2 parts by weight of multi-walled CNTs (with a purity of 95% or greater, an average diameter of 20 nm, and an average length of 25 $\mu$m, available from ENanotec), based on 100 parts by weight of the lithium transition metal oxide was used instead of the mixture of the lithium transition metal oxide ($Li_{1.18}Ni_{0.17}Co_{0.1}Mn_{0.56}O_2$) with a layered structure and 2 parts by weight of single-walled CNTs (with a purity of 90% or greater, an average diameter of 2 nm, and an average length of 30 $\mu$m, available from ENanotec), based on 100 parts by weight of the lithium transition metal oxide. The coated multi-walled CNTs have an average length of 80 nm and an average aspect ratio of 4.

Example 7: Positive active material including multi-walled CNTs coated on lithium transition metal oxide

A positive active material including multi-walled CNTs coated on lithium transition metal oxide was obtained in the same manner as in Example 1, except that a mixture of the lithium transition metal oxide ($Li_{1.18}Ni_{0.17}Co_{0.1}Mn_{0.56}O_2$) with a layered structure and 5 parts by weight of multi-walled CNTs (with a purity of 95% or greater, an average diameter of 20 nm, and an average length of 25 $\mu$m, available from ENanotec), based on 100 parts by weight of the lithium transition metal oxide was used instead of the mixture of the lithium transition metal oxide ($Li_{1.18}Ni_{0·17}Co_{0.1}Mn_{0.56}O_2$) with a layered structure and 2 parts by weight of single-walled CNTs (with a purity of 90% or greater, an average diameter of 2 nm, and an average length of 30 $\mu$m, available from ENanotec), based on 100 parts by weight of the lithium transition metal oxide. The coated multi-walled CNTs have an average length of 80 nm and an average aspect ratio of 4.

Example 8: Positive active material including multi-walled CNTs coated on lithium transition metal oxide

A positive active material including multi-walled CNTs coated on lithium transition metal oxide was obtained in the same manner as in Example 1, except that a mixture of the lithium transition metal oxide ($Li_{1.18}Ni_{0.17}Co_{0.1}Mn_{0.56}O_2$) with a layered structure and 0.05 parts by weight of multi-walled CNTs (with a purity of 95% or greater, an average diameter of 20 nm, and an average length of 25 $\mu$m, available from ENanotec), based on 100 parts by weight of the lithium transition metal oxide, was used instead of the mixture of the lithium transition metal oxide ($Li_{1.18}Ni_{0.17}Co_{0.1}Mn_{0.56}O_2$) with a layered structure and 2 parts by weight of single-walled CNTs (with a purity of 90% or greater, an average diameter of 2 nm, and an average length of 30 $\mu$m, available from ENanotec), based on 100 parts by weight of the lithium transition metal oxide. The coated multi-walled CNTs have an average length of 80 nm and an average aspect ratio of 4.

Example 9: Positive active material including single-walled CNTs coated on lithium transition metal oxide

A positive active material coated including multi-walled CNTs coated on lithium transition metal oxide was obtained in the same manner as in Example 1, except that a mixture of the lithium transition metal oxide ($Li_{1.18}Ni_{0.17}Co_{0.1}Mn_{0.56}O_2$) with a layered structure and 1 part by weight of multi-walled CNTs (with a purity of 95% or greater, an average diameter of 20 nm, and an average length of 25 $\mu$m, available from ENanotec), based on 100 parts by weight of the lithium transition metal oxide was used instead of the mixture of the lithium transition metal oxide ($Li_{1.18}Ni_{0.17}Co_{0.1}Mn_{0.56}O_2$) with a layered structure and 2 parts by weight of single-walled CNTs (with a purity of 90% or greater, an average diameter of 2 nm, and an average length of 30 $\mu$m, available from ENanotec), based on 100 parts by weight of the lithium transition metal oxide. The coated multi-walled CNTs have an average length of 80 nm and an average aspect ratio of 4.

Comparative Example 1: Positive active material of lithium transition metal oxide

A 2 M nickel sulfate aqueous solution ($NiSO_4 \cdot 6(H_2O)$, available from Aldrich), a 2 M cobalt sulfate aqueous solution ($CoSO_4 \cdot 7(H_2O)$, available from Aldrich), and a 2 M manganese sulfate aqueous solution ($MnSO_4 \cdot (H_2O)_x$, available from Aldrich) were prepared, respectively. Then, a mixture was prepared by mixing the nickel sulfate aqueous solution, the cobalt sulfate aqueous solution, and the manganese sulfate aqueous solution to provide nickel: cobalt: manganese in a mole ratio of 0.17:0.1:0.56. The mixture and a 2 M $Na_2CO_3$ aqueous solution were added to 4L of a 0.2 M $NH_4OH$ solution at a rate of 3 mL/min to maintain a pH of 8 for 10 hours, and then a precipitate obtained therefrom was filtered. The precipitate was washed with water and dried. Then, the precipitate was mixed with $Li_2CO_3$ (available from Aldrich) to provide Li:Ni:Co:Mn in a mole ratio of 1.18:0.17:0.1:0.56 and heat-treated at 950°C in an air atmosphere for 5 hours, thereby obtaining a lithium transition metal oxide ($Li_{1.18}Ni_{0.17}Co_{0.1}Mn_{0.56}O_2$) with a layered structure.

Comparative Example 2: Positive active material including fullerene (C60) coated on lithium transition metal oxide

A 2 M nickel sulfate aqueous solution ($NiSO_4.6(H_2O)$, available from Aldrich), a 2 M cobalt sulfate aqueous solution ($CoSO_4 \cdot 7(H_2O)$, available from Aldrich), and a 2 M manganese sulfate aqueous solution ($MnSO_4 \cdot (H_2O)_x$, available from Aldrich) were prepared, respectively. Then, a mixture was prepared by mixing the nickel sulfate aqueous solution, the cobalt sulfate aqueous solution, and the manganese sulfate aqueous solution to provide nickel: cobalt: manganese in a mole ratio of 0.17:0.1:0.56. The mixture and a 2 M $Na_2CO_3$ aqueous solution were added to 4L of a 0.2 M $NH_4OH$ solution at a rate of 3 mL/min to maintain a pH of 8 for 10 hours, and then a precipitate obtained therefrom was filtered. The precipitate was washed with water and dried. Then, the precipitate was mixed with $Li_2CO_3$ (available from Aldrich) to provide Li:Ni:Co:Mn in a mole ratio of 1.18:0.17:0.1:0.56 and heat-treated at 950°C in an air atmosphere for 5 hours, thereby obtaining a lithium transition metal oxide ($Li_{1.18}Ni_{0.17}Co_{0.1}Mn_{0.56}O_2$) with a layered structure.

A 50 mL solution was prepared by dissolving 10 milligrams (mg) of fullerene (C60, average diameter: 1.1 nm, available from ENanotec) in a 50 mL mixture of water and acetone. The lithium transition metal oxide ($Li_{1.18}Ni_{0.17}Co_{0.1}Mn_{0.56}O_2$) with a layered structure was added to the solution, and the solvent was removed at 120°C for 24 hours to provide a dried product. Then a dry surface treatment was performed on the dried product by using NOBILTA device (model: NOB-MINI, available from Hosokawa) at 3000 RPM for 20 minutes (min), thereby obtaining a positive active material including fullerene in an amount of 2 parts by weight coated on the lithium transition metal oxide, based on 100 parts by weight of the lithium transition metal oxide.

Comparative Example 3: Positive active material including carbon nanofibers coated on lithium transition metal oxide

A 2 M nickel sulfate aqueous solution ($NiSO_4-6(H_2O)$, available from Aldrich), a 2 M cobalt sulfate aqueous solution ($CoSO_4 \cdot 7(H_2O)$, available from Aldrich), and a 2 M manganese sulfate aqueous solution ($MnSO_4 \cdot (H_2O)_x$, available from Aldrich) were prepared, respectively. Then, a mixture was prepared by mixing the nickel sulfate aqueous solution, the cobalt sulfate aqueous solution, and the manganese sulfate aqueous solution to make nickel: cobalt: manganese having a mole ratio of 0.17:0.1:0.56. The mixture and a 2 M $Na_2CO_3$ aqueous solution were added to 4L of a 0.2 M $NH_4OH$ solution at a rate of 3 mL/min to maintain a pH of 8 for 10 hours, and then a precipitate obtained therefrom was filtered. The precipitate was washed with water and dried. Then, the precipitate was mixed with $Li_2CO_3$ (available from Aldrich) to provide Li:Ni:Co:Mn in a mole ratio of 1.18:0.17:0.1:0.56 and heat-treated at 950°C in an air atmosphere for 5 hours, thereby obtaining a lithium transition metal oxide ($Li_{1.18}Ni_{0.17}Co_{0.1}Mn_{0.56}O_2$) with a layered structure.

Vapor grown carbon nanofibers (VGCNF, with an average diameter of 100 nm, an average length of 20 $\mu$m, available from Showa Denko) were mixed with the lithium transition metal oxide ($Li_{1.18}Ni_{0.17}Co_{0.1}Mn_{0.56}O_2$) with a layered structure to prepared a mixture. Then, a dry surface treatment was performed on the mixture by using NOBILTA device (model: NOB-MINI, available from Hosokawa) at 3000 RPM for 20 min, thereby obtaining 2 parts by weight, based on 100 parts by weight of the lithium transition oxide, of positive active material including carbon nanofibers of 2 parts by weight coated on the lithium transition metal oxide, based on 100 parts by weight of the lithium transition metal oxide. The coated carbon nanofibers have an average length of 6 um and an average aspect ratio of 60.

(Preparation of Positive Electrode)

Example 10: Positive electrode

The positive active material of Example 1, a binder solution obtained by dissolving 3 wt% of polyvinylidene fluoride (PVdF) in N-methylpyrrolidone (NMP), and a conducting agent (acetylene black, Denka Black) were added to the agate mortar at a weight ratio of 94:3:3 and mixed to prepare a slurry. Then, the slurry was coated on an aluminum foil having a thickness of 15 μm via bar coating. The coated aluminum foil was put into an oven and firstly dried for about 2 hours at 90°C so that the NMP substantially evaporated, and then put into a vacuum oven and secondly dried for about 2 hours at 120°C so that the NMP was effectively removed, to provide an electrode. Then, the electrode was pressed and punched to obtain a positive electrode for a coin cell, which has a thickness of 60 μm. A capacity of the positive electrode was about 1.7 mAh/cm$^2$, and a thickness of the positive electrode was from about 50 μm to about 60 μm.

Examples 11 through 18: Positive electrodes

Positive electrodes for coin cells were prepared in the same manner as in Example 10, except that the positive active materials of Examples 2 through 9 were each used instead of the positive active material of Example 1.

Example 19: Positive electrode

A positive electrode for a coin cell was prepared in the same manner as in Example 10, except that a slurry was prepared by adding and mixing the positive active material of Example 1, a binder solution obtained by dissolving 3 weight percent (wt%) of polyvinylidene fluoride (PVdF) in N-methylpyrrolidone (NMP), and a conducting agent (acetylene black, Denka Black) to the agate mortar at a weight ratio of 90:6:4 instead of the slurry prepared by adding and mixing the positive active material of Example 1, a binder solution obtained by dissolving 3 wt% of polyvinylidene fluoride (PVdF) in N-methylpyrrolidone (NMP), and a conducting agent (acetylene black, Denka Black) to the agate mortar at a weight ratio of 94:3:3.

Example 20: Positive electrode

A positive electrode for a coin cell was prepared in the same manner as in Example 10, except that a slurry was prepared by adding and mixing the positive active material of Example 1, a binder solution obtained by dissolving 3 wt% of polyvinylidene fluoride (PVdF) in N-methylpyrrolidone (NMP), and a conducting agent (acetylene black, Denka Black) to the agate mortar at a weight ratio of 86:8:6 instead of the slurry prepared by adding and mixing the positive active material of Example 1, a binder solution obtained by dissolving 3 wt% of polyvinylidene fluoride (PVdF) in N-methylpyrrolidone (NMP), and a conducting agent (acetylene black, Denka Black) to the agate mortar at a weight ratio of 94:3:3.

Example 21: Positive electrode

A positive electrode for a coin cell was prepared in the same manner as in Example 10, except that a slurry was prepared by adding and mixing the positive active material of Example 1 and a conducting agent (acetylene black, Denka Black) to the agate mortar at a weight ratio of 94:3 instead of the slurry prepared by adding and mixing the positive active material of Example 1, a binder solution obtained by dissolving 3 wt% of polyvinylidene fluoride (PVdF) in N-methylpyrrolidone (NMP), and a conducting agent (acetylene black, Denka Black) to the agate mortar at a weight ratio of 94:3:3.

Comparative Examples 4 through 6: Positive electrodes

Positive electrodes for coin cells were prepared in the same manner as in Example 10, except that each of the positive active materials of Comparative Examples 1 through 3 was used instead of the positive active material of Example 1.

Comparative Example 7: Positive electrode

A positive electrode for a coin cell was prepared in the same manner as in Example 10, except that a slurry was prepared by adding and mixing the positive active material of Comparative Example 1, a binder solution obtained by dissolving 3 wt% of polyvinylidene fluoride (PVdF) in N-methylpyrrolidone (NMP), and a conducting agent (acetylene black, Denka Black) to the agate mortar at a weight ratio of 90:6:4 instead of the slurry prepared by adding and mixing the positive active material of Example 1, a binder solution obtained by dissolving 3 wt% of polyvinylidene fluoride (PVdF) in N-methylpyrrolidone (NMP), and a conducting agent (acetylene black, Denka Black) to the agate mortar at a weight ratio of 94:3:3.

Comparative Example 8: Positive electrode

A positive electrode for a coin cell was prepared in the same manner as in Example 10, except that a slurry was prepared by adding and mixing the positive active material of Comparative Example 1, a binder solution obtained by dissolving 3 wt% of polyvinylidene fluoride (PVdF) in N-methylpyrrolidone (NMP), and a conducting agent (acetylene black, Denka Black) to the agate mortar at a weight ratio of 86:8:6 instead of the slurry prepared by adding and mixing the positive active material of Example 1, a binder solution obtained by dissolving 3 wt% of polyvinylidene fluoride (PVdF) in N-methylpyrrolidone (NMP), and a conducting agent (acetylene black, Denka Black) to the agate mortar at a weight ratio of 94:3:3.

Comparative Example 9: Positive electrode

A positive electrode for a coin cell was prepared in the same manner as in Example 10, except that a slurry was prepared by adding and mixing the positive active material of Comparative Example 1, a binder solution obtained by dissolving 3 wt% of polyvinylidene fluoride (PVdF) in N-methylpyrrolidone (NMP), and a conducting agent (carbon black, Super-P) to the agate mortar at a weight ratio of 94:3:3 instead of the slurry prepared by adding and mixing the positive active material of Example 1, a binder solution obtained by dissolving 3 wt% of polyvinylidene fluoride (PVdF) in N-methylpyrrolidone (NMP), and a conducting agent (acetylene black, Denka Black) to the agate mortar at a weight ratio of 94:3:3.

Comparative Example 10: Positive electrode

A positive electrode for a coin cell was prepared in the same manner as in Example 10, except that a slurry was prepared by adding and mixing the positive active material of Comparative Example 1, a binder solution obtained by dissolving 3 wt% of polyvinylidene fluoride (PVdF) in N-methylpyrrolidone (NMP), and a conducting agent (carbon black, Ketjen black) to the agate mortar at a weight ratio of 94:3:3 instead of the slurry prepared by adding and mixing the positive active material of Example 1, a binder solution obtained by dissolving 3 wt% of polyvinylidene fluoride (PVdF) in N-methylpyrrolidone (NMP), and a conducting agent (acetylene black, Denka Black) to the agate mortar at a weight ratio of 94:3:3.

Comparative Example 11: Positive electrode

A positive electrode for a coin cell was prepared in the same manner as in Example 10, except that a slurry was prepared by adding and mixing the positive active material of Comparative Example 1 and a conducting agent (acetylene black, Denka Black) to the agate mortar at a weight ratio of 94:3 instead of the slurry prepared by adding and mixing the positive active material of Example 1, a binder solution obtained by dissolving 3 wt% of polyvinylidene fluoride (PVdF) in N-methylpyrrolidone (NMP), and a conducting agent (acetylene black, Denka Black) to the agate mortar at a weight ratio of 94:3:3.

(Manufacture of Lithium Battery)

Example 22: Lithium battery

A coin cell was manufactured using the positive electrode with a diameter of 1.5 centimeter (cm) prepared in Example 10, a graphite negative electrode with a diameter of 1.6 cm, an electrolyte prepared by dissolving 1.3 M of lithium salt ($LiPF_6$) in a mixed solvent of ethylenecarbonate (EC), diethylcarbonate (DEC) and ethylmethylcarbonate (EMC) with a volume ratio of 3:5:2, and a polyethylene separator.

Examples 23 through 33: Lithium batteries

Coin cells were manufactured in the same manner as in Example 22, except that each of the positive electrodes for coin cells prepared in Examples 11 through 21 was used instead of the positive electrode for a coin cell prepared in Example 10.

Comparative Examples 12 through 19: Lithium batteries

Coin cells were manufactured in the same manner as in Example 22, except that each of the positive electrodes for coin cells prepared in Comparative Examples 4 through 11 was used instead of the positive electrode for a coin cell prepared in Example 10.

(Analysis of Surfaces of Positive Active Material and Positive Electrode)

Analysis Example 1: SEM image analysis

Surfaces of the positive active materials of Examples 1 and 5 and Comparative Examples 1 and 3 were analyzed using a SEM (model: S-5500, available from Hitachi) at a magnification of 50,000x. The results are shown in FIGS. 2A through 2D.

Referring to FIGS. 2A through 2D, a carbon material was not coated on a surface of the lithium transition metal oxide of the positive active material of Comparative Example 1, as shown in FIG. 2C, but CNTs or carbon nanofibers were coated on a surface of the lithium transition metal oxide of each of the positive active materials of the positive active materials of Examples 1 and 5 and Comparative Example 3, respectively, as shown in FIGS. 2A, 2B, and 2D.

Also, an average diameter and an average length of 10 or more of the CNTs and the carbon nanofibers in FIGS. 2A, 2B, and 2D were determined to calculate an average aspect ratio of the CNTs or the carbon nanofibers on the surfaces of the positive active materials of Examples 1 and 5 and Comparative Example 3.

The average diameter of the CNTs and the average diameter of the carbon nanofibers were respectively obtained from the average values of the largest diameters of the CNTs and the carbon nanotubes, and the average lengths were respectively obtained from the average values of the lengths of the CNTs and the carbon nanofibers. The results are shown in Table 1 below.

Table 1

| | Average diameter (nm) | Average length (nm) | Average aspect ratio (average length (nm)/ average diameter (nm)) |
|---|---|---|---|
| Example 1 | 2 | 40 | 20 |
| Example 5 | 2 | 400 | 200 |
| Comparative Example 3 | 100 | 6000 | 60 |

Referring to Table 1, an aspect ratio of the CNTs on the surface of the positive active material of Example 1 is 20, an aspect ratio of the CNTs on the surface of the positive active material of Example 5 is 200, and an aspect ratio of the carbon nanofibers on the surface of the positive active material of Comparative Example 3 is 60.

Analysis Example 2: Raman spectrum analysis

The single-walled CNTs and the multi-walled CNTs coated on the surfaces of the positive active materials of Examples 1 and 6 were each analyzed using a Raman spectrometer (available from Renishaw) with a laser at a wavelength of 514.5 nm to measure the maximum peak intensity of the G band between about 1575 $cm^{-1}$ and about 1600 $cm^{-1}$ and the maximum peak intensity of the D band between about 1340 $cm^{-1}$ and about 1360 $cm^{-1}$. The results are shown in FIGS. 3A and 3B.

Also, $I_D/I_G$ ratios were calculated. The calculated results are shown in Table 2 below.

Table 2

| | $I_D/I_G$ ratio |
|---|---|
| Example 1 | 1.2 |
| Example 6 | 0.7 |

Referring to Table 2, a $I_D/I_G$ ratio of the single-walled CNTs on the surface of the positive active material of Example 1 is 1.2, which is greater than 1, and a $I_D/I_G$ ratio of the multi-walled CNTs on the surface of the positive active material of Example 6 is 0.7, which is greater than 0.1. Thus, it may be confirmed that disorders or defects in the single-walled CNTs and the multi-walled CNTs on the surface of the positive active materials of Examples 1 and 6 occur.

Analysis Example 3: Energy dispersive analysis of X-rays (EDAX)

Carbon concentrations of the coated surfaces of the positive electrodes manufactured in Example 10 and Comparative Example 4 were analyzed by using an energy dispersion X-ray spectrometer (model: S-4700, voltage 15 kV, available from Horiba) on the coated surfaces of the positive electrodes manufactured in Example 10 and Comparative Example 4. The results are shown in Table 3 below.

Table 3

|  | Carbon concentration (at%) |
| --- | --- |
| Example 10 | 26.83 |
| Comparative Example 4 | 9.62 |

Referring to Table 3, a carbon concentration of the coated surface of the positive electrode of Example 10 is 26.83 at%, and a carbon concentration of the coated surface of the positive electrode of Comparative Example 4 is 9.62 at%. Thus, it may be confirmed that the carbon concentration of the coated surface of the positive electrode of Example 10 is 20 at% or greater.

Analysis Example 4: X-ray photoelectron spectroscopy analysis

A double-sided tape was attached to a metal plate, and a sample of the positive active material of the positive electrode of Example 10 was sprayed thereon to a thickness so that the tape may not be seen, and then a surface of the metal plate was flattened and compressed to be fastened on a folder.

An XPS spectrum of a C1s valence band was obtained using a XPS (model: Quantum 2000 Scanning ESCA Microprobe, available from Physical Electronics) using monochromatic Al-K$\alpha$ radiation (1486.6 eV, 27.7 W) as a radiation source, 0.1 mm of measurement area, and a detection angle of 45 degrees. Concentrations of manganese and carbon on the surface of the positive electrode of Example 10 were integrated and each was divided by a sensitivity factor. The results are shown in FIG. 5 and Table 4 below.

Table 4

|  | Carbon concentration (at%) |
| --- | --- |
| Example 10 | 72.72 |

Referring to Table 4, the carbon concentration on the surface of the positive electrode of Example 10 is 72.72 at%. Thus, it may be confirmed that the carbon concentration on the surface of the positive electrode of Example 10 is 20 at% or greater.

(Battery Characteristics Evaluation)

Evaluation Example 1: Evaluation of electrical conductivity

Electrical conductivities of the positive electrodes manufactured in Example 21 and Comparative Example 11 were respectively measured using 4 probes at a voltage of 90 V and at a temperature of 25°C. The results are shown in Table 5.

Table 5

|  | Electrical conductivity (mS/cm) |
| --- | --- |
| Example 21 | 170.0 |
| Comparative Example 11 | 4.137 |

In Table 5, mS/cm refers to millisiemens per centimeter.

Referring to Table 5, an electrical conductivity of the positive electrode manufactured in Example 21 is about 40 times greater than an electrical conductivity of the positive electrode manufactured in Comparative Example 11. Thus, it may be confirmed that the electrical conductivity of the positive electrode of Example 21 is improved as compared to the electrical conductivity of the positive electrode of Comparative Example 11.

Evaluation Example 2: Evaluation of charge/discharge rate capability - capacity change according to charge/discharge rate

A formation charge/discharge process at room temperature was performed twice on the lithium batteries manufactured in Examples 22, 31, and 32 and Comparative Examples 12, 15, and 16. In the first formation step, the lithium batteries were charged to 4.7 V at a 0.1 C rate. Then, the batteries were constant current discharged at 0.1 C to 2.5 V.

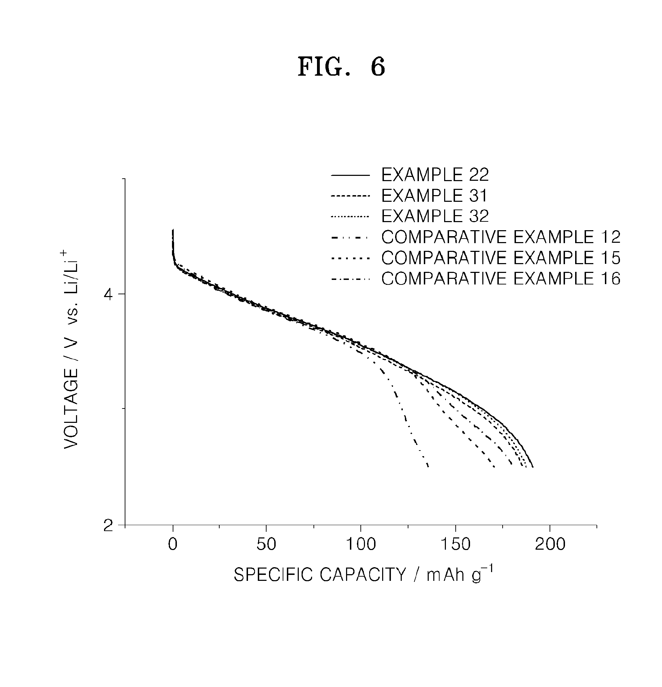

A charge capacity and a discharge capacity of each of the batteries that went through the formation charge/discharge process were measured by charging at 0.5 C in the same manner as described above and discharging at 0.1 C to 2.5 V for the first cycle. For the second cycle, a charge capacity and a discharge capacity of each of the batteries were measured by charging at 0.5 C in the same manner as described above and discharging at 0.2 C to 2.5 V. Then, a discharge capacity of each of the batteries was measured by charging at 0.5 C in the same manner as described above and discharging at 1 C to 2.5 V, and a discharging capacity of each of the batteries was measured by re-charging at 0.5 C in the same manner as described above and discharging at 2 C to 2.5 V. The specific capacity from the 2C discharge of each cell is shown in FIG. 6 and Table 6 below.

Capacity retention rates (%) were calculated from the measurement results. The capacity retention rates (%) are each obtained from Equation 1 below.

Equation 1

Capacity retention rate (%) = discharge capacity at 2 C / discharge capacity at 0.2 C

Table 6

| | Discharge capacity at 0.2 C (mAh) | Discharge capacity at 2 C (mAh) | Capacity retention rate (%) |
|---|---|---|---|
| Example 22 | 243.0 | 199.5 | 82.1 |
| Example 31 | 227.7 | 185.8 | 81.6 |
| Example 32 | 230.7 | 187.1 | 81.1 |
| Comparative Example 12 | 220.7 | 142.0 | 64.4 |
| Comparative | 233.0 | 171.0 | 73.4 |
| Example 15 | | | |
| Comparative Example 16 | 236.8 | 180.4 | 76.2 |

Referring to FIG. 6 and Table 6, the capacity retention rate at 2C of the lithium batteries of Examples 22, 31, and 32 is higher than the capacity retention rate of the lithium batteries of Comparative Examples 12, 15, and 16. Thus, it may be confirmed that the charge/discharge rate capability of the lithium batteries of Examples 22, 31, and 32 are each better than the charge/discharge rate capability of the lithium batteries of Comparative Examples 12, 15, and 16.

Evaluation Example 3: Lifespan Evaluation

A formation charge/discharge process at room temperature was performed twice in the same manner as in Evaluation Example 2 on the lithium batteries manufactured in Example 31 and Comparative Example 15.

Each of the batteries that went through the formation charge/discharge process was charged at 0.5 C in the same manner as described above and discharged at 0.2 C to 2.5 V. The charge/discharge conditions were used as a standard charge/discharge conditions and the capacity were used as a standard capacity herein.

Subsequently, each of the batteries was charged at 1 C in the same manner as described above and discharged at 1 C to 2.5 V. Here, the discharge capacity was the discharge capacity measured at a 7th cycle. A cycle lifespan of the batteries was evaluated by repeating the charging and discharging.

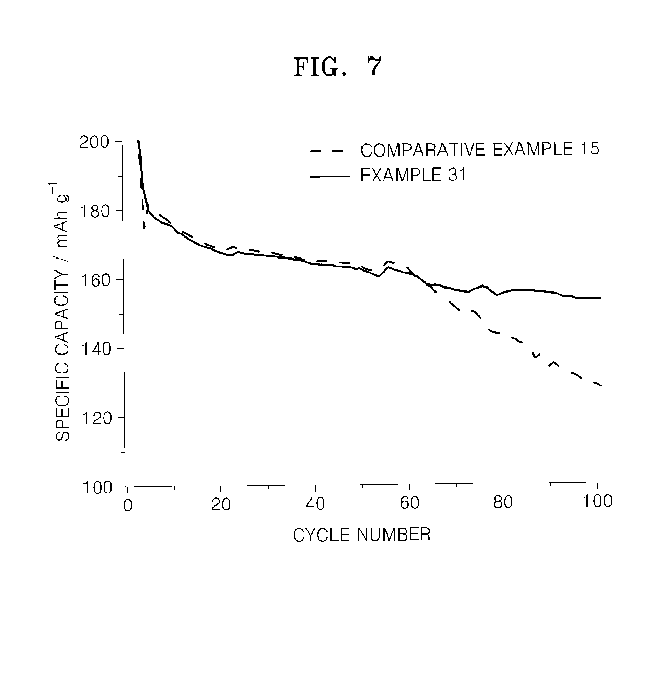

Discharging capacities at a 7th cycle and at a 100th cycle were measured for each of the batteries. The results are shown in FIG. 7 and Table 7.

Capacity retention rates are calculated from the measurement results. The capacity retention rates are each obtained from Equation 2 below.

Equation 2

capacity retention rate (%) = discharge capacity at 100$^{th}$ cycle / discharge capacity at 7$^{th}$ cycle

Table 7

|  | Discharge capacity at 7$^{th}$ cycle (mAh) | Discharge capacity at 100$^{th}$ cycle (mAh) | Capacity retention rate (%) |
|---|---|---|---|
| Example 31 | 179.2 | 153.4 | 85.6 |
| Comparative Example 15 | 177.2 | 128.9 | 72.7 |

Referring to FIG. 7 and Table 7, a capacity retention rate of the lithium battery of Example 31 is improved as compared to the capacity retention rate of the lithium battery of Comparative Example 15. Thus, it may be confirmed that the lifespan of the lithium battery of Example 31 is better than the lifespan of the lithium battery of Comparative Example 15.

It should be understood that the exemplary embodiments described herein should be considered in a descriptive sense only and not for purposes of limitation. Descriptions of features, advantages, or aspects within each embodiment shall be considered as available for other similar features, advantages, or aspects in other embodiments.

**Claims**

1. A positive active material comprising:

   a lithium transition metal oxide having a layered or spinel structure; and
   a plurality of carbon nanotubes on a surface of the lithium transition metal oxide.

2. The positive active material of claim 1, wherein an average aspect ratio of the carbon nanotubes is about 2 to about 500.

3. The positive active material of claim 1 or 2, wherein an average diameter of the carbon nanotubes is from 1 nanometer to 50 nanometer.

4. The positive active material of any of claims 1-3, wherein the carbon nanotubes comprise single-walled carbon nanotubes, multi-walled carbon nanotubes, or a combination thereof.

5. The positive active material of claim 4, wherein a $I_D/I_G$ ratio of the single-walled carbon nanotubes, when determined by Raman spectroscopy with a laser at a wavelength of 514.5 nanometers, is from 1.0 to 2.0, wherein the $I_D/I_G$ ratio is a ratio of a maximum peak intensity of a D band between 1340 inverse centimeters$^{-1}$ and 1360 inverse centimeters to a maximum peak intensity of a G band between 1575 inverse centimeters and 1600 inverse centimeters.

6. The positive active material of claim 4, wherein a $I_D/I_G$ ratio of the multi-walled carbon nanotubes, when determined by Raman spectroscopy with a laser at a wavelength of 514.5 nanometers, is from 0.1 to 1.0, wherein the $I_D/I_G$ ratio is a ratio of a maximum peak intensity of a D band between 1340 inverse centimeters and 1360 inverse centimeters to a maximum peak intensity of a G band between 1575 inverse centimeters and 1600 inverse centimeters.

7. The positive active material of any of claims 1-6, wherein a content of the carbon nanotubes is from 0.01 parts to 15 parts by weight, based on 100 parts by weight of the lithium transition metal oxide.

8. The positive active material of any of claims 1-7, wherein the lithium transition metal oxide is a lithium transition metal oxide represented by Chemical Formulas 1 through 4, or a combination thereof:

   $$xLi[Li_{1/3}Me_{2/3}]O_2\text{-}(1\text{-}x)LiMe'O_2 \qquad \text{Chemical Formula 1}$$

wherein 0 < x < 0.9, Me is Mn, Mo, W, V, Ti, Zr, Ru, Rh, Pd, Os, Ir, Pt, or a combination thereof, and Me' is Ni, Mn, Co, or a combination thereof,

$$yLi[Li_{1/3}((M1)_a(M2)_b(Mn)_c)_{2/3}]O_2\text{-}(1\text{-}y)LiMe\,'O_2 \qquad \text{Chemical Formula 2}$$

wherein $0 \leq a \leq 1/3$, $0 \leq b \leq 1/3$, a+b+c=1, 0 < y < 0.9, M1 is Ni, Cu, Zn, Co, Cr, Fe, Mg, or a combination thereof, M2 is Mo, W, V, Ti, Zr, Ru, Rh, Pd, Os, Ir, Pt, or a combination thereof, and Me' is Ni, Mn, Co, or a combination thereof,

$$Li_dCo_{1\text{-}e\text{-}g}Ni_e(M3)_gO_{2\text{-}j}(X1)_j \qquad \text{Chemical Formula 3}$$

wherein 0.8 < d $\leq$ 1.6, $0 \leq e \leq 1$, $0 \leq g \leq 0.5$, $0 \leq j \leq 1$, M3 is Mn, Ni, Co, Cu, Mg, Na, Ca, Ti, Zn, Ga, Ge, Al, Cr, Mg, Sr, Mo, W, V, Ti, Zr, Ru, Rh, Pd, Os, Ir, Ag, Au, Hf, Sn, Pt, or a combination thereof, and X1 is O, F, S, P, or a combination thereof, or

$$Li_pMn_{2\text{-}q}(M4)_qO_{4\text{-}t}(X2)_t \qquad \text{Chemical Formula 4}$$

wherein 0.8 < p $\leq$ 1.6, $0 \leq q \leq 1$, $0 \leq t \leq 1$, M4 is Mn, Ni, Co, Cu, Mg, Na, Ca, Ti, Zn, Ga, Ge, Al, Cr, Mg, Sr, Mo, W, V, Ti, Zr, Ru, Rh, Pd, Os, Ir, Ag, Au, Hf, Sn, Pt, or a combination thereof, and X2 is O, F, S, P, or a combination thereof.

9. A method of preparing a positive active material, the method comprising disposing a plurality of carbon nanotubes on a surface of a lithium transition metal oxide with a layered or spinel structure using a physical or chemical surface treatment method to prepare the positive active material.

10. The method of claim 9, wherein the disposing the carbon nanotubes comprises disposing the carbon nanotubes on the surface of the lithium transition metal oxide using a dry surface treatment method.

11. The method of claim 9 or 10, wherein an average aspect ratio of the carbon nanotubes is 50 or less.

12. The method of any of claims 9-11, wherein the carbon nanotubes are single-walled carbon nanotubes, multi-walled carbon nanotubes, or a combination thereof.

13. The method of any of claims 9-12, wherein a content of the carbon nanotubes is from 0.01 parts to 15 parts by weight, based on 100 parts by weight of the lithium transition metal oxide.

14. The method of any of claims 9-13, wherein the lithium transition metal oxide is a lithium transition metal oxide represented by Chemical Formulas 1 through 4, or a combination thereof:

$$xLi[Li_{1/3}Me_{2/3}]O_2\text{-}(1\text{-}x)LiMe'O_2 \qquad \text{Chemical Formula 1}$$

wherein 0 < x < 0.9, Me is Mn, Mo, W, V, Ti, Zr, Ru, Rh, Pd, Os, Ir, or Pt, and Me' is Ni, Mn, or Co, or a combination thereof,

$$yLi[Li_{1/3}((M1)_a(M2)_b(Mn)_c)_{2/3}]O_2\text{-}(1\text{-}y)LiMe\,'O_2 \qquad \text{Chemical Formula 2}$$

wherein $0 \leq a \leq 1/3$, $0 \leq b \leq 1/3$, a+b+c=1, 0 < y < 0.9, M1 is Ni, Cu, Zn, Co, Cr, Fe, or Mg, or a combination thereof, M2 is Mo, W, V, Ti, Zr, Ru, Rh, Pd, Os, I, Pt, or a combination thereof, and Me' is Ni, Mn, Co, or a combination thereof,

$$Li_dCO_{1\text{-}e\text{-}g}Ni_e(M3)_gO_{2\text{-}j}(X1)_j \qquad \text{Chemical Formula 3}$$

wherein 0.8 < d $\leq$ 1.6, $0 \leq e \leq 1$, $0 \leq g \leq 0.5$, $0 \leq j \leq 1$, M3 is Mn, Ni, Co, Cu, Mg, Na, Ca, Ti, Zn, Ga, Ge, Al, Cr, Mg, Sr, Mo, W, V, Ti, Zr, Ru, Rh, Pd, Os, Ir, Ag, Au, Hf, Sn, Pt, or a combination thereof, and X1 is O, F, S, P, or a combination thereof, or

$$Li_pmn_{2\text{-}q}(m4)_qO_{4\text{-}t}(X2)_t \qquad \text{Chemical Formula 4}$$

wherein 0.8 < p $\leq$ 1.6, $0 \leq q \leq 1$, $0 \leq t \leq 1$, M4 is Mn, Ni, Co, Cu, Mg, Na, Ca, Ti, Zn, Ga, Ge, Al, Cr, Mg, Sr, Mo, W, V, Ti, Zr, Ru, Rh, Pd, Os, Ir, Ag, Au, Hf, Sn, Pt, or a combination thereof, and X2 is O, F, S, P, or a combination thereof.

**15.** A lithium battery comprising:

a positive electrode;
an electrolyte; and
a negative electrode,

wherein the positive electrode comprises the positive active material of any of claims 1-8.

FIG. 1

# FIG. 2A

SAIT 5.0kV x50.0k      1.00um

# FIG. 2B

SAIT 5.0kV x50.0k      1.00um

FIG. 2C

FIG. 2D

FIG. 3A

FIG. 3B

# FIG. 4

FIG. 5

FIG. 6

# FIG. 7

Europäisches
Patentamt
European
Patent Office
Office européen
des brevets

**EUROPEAN SEARCH REPORT**

Application Number

EP 13 17 1687

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | KR 101 103 606 B1 (HANWHA CHEMICAL CORP [KR]) 9 January 2012 (2012-01-09) | 1-4,7-9, 11-15 | INV. H01M4/04 |
| Y | * the whole document * -& WO 2012/086976 A2 (HANWHA CHEMICAL CORP [KR]; PARK SEI UNG [KR]; LEE DONG SUEK [KR]; RYU) 28 June 2012 (2012-06-28) * paragraphs [0023], [0045] - [0108], [0169] - [0178], [0229]; figures 1,2 * | 5,6 | H01M4/131 H01M4/1391 H01M4/36 H01M4/505 H01M4/62 |
| X | EP 2 144 315 A1 (TOYOTA MOTOR CO LTD [JP]; SEI CORP [JP]) 13 January 2010 (2010-01-13) | 1-4,7-15 | ADD. H01M10/0525 H01M4/525 |
| Y | * paragraphs [0023], [0024], [0039], [0042] - [0045], [0048], [0049], [0053] - [0057], [0094]; claims 1,6; figures 1,2 * | 5,6 | |
| X | US 2010/261061 A1 (YUASA TOYOTAKA [JP] ET AL) 14 October 2010 (2010-10-14) | 1-4,7-15 | |
| Y | * paragraphs [0023] - [0045]; figures 1,2 * | 5,6 | |
| X | EP 2 228 856 A1 (KAO CORP [JP]) 15 September 2010 (2010-09-15) | 1-4,7-9, 11-15 | TECHNICAL FIELDS SEARCHED (IPC) H01M |
| Y | * paragraphs [0017] - [0042], [0081], [0082]; example 1 * | 5,6 | |
| Y | US 2010/062229 A1 (HATA KENJI [JP] ET AL) 11 March 2010 (2010-03-11) * paragraph [0123] * | 5 | |
| Y | JP 2004 123505 A (UNIV NAGOYA; TORAY INDUSTRIES) 22 April 2004 (2004-04-22) * paragraphs [0146], [0147] * | 6 | |

The present search report has been drawn up for all claims

| Place of search | Date of completion of the search | Examiner |
|---|---|---|
| The Hague | 2 October 2013 | Schwake, Andree |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

**ANNEX TO THE EUROPEAN SEARCH REPORT
ON EUROPEAN PATENT APPLICATION NO.**

EP 13 17 1687

This annex lists the patent family members relating to the patent documents cited in the above-mentioned European search report.
The members are as contained in the European Patent Office EDP file on
The European Patent Office is in no way liable for these particulars which are merely given for the purpose of information.

02-10-2013

| Patent document cited in search report | Publication date | Patent family member(s) | Publication date |
|---|---|---|---|
| KR 101103606 B1 | 09-01-2012 | CA 2792296 A1<br>CN 102823038 A<br>EP 2522045 A2<br>JP 2013506266 A<br>KR 101103606 B1<br>KR 20120071312 A<br>TW 201230468 A<br>US 2012244334 A1<br>WO 2012086976 A2 | 28-06-2012<br>12-12-2012<br>14-11-2012<br>21-02-2013<br>09-01-2012<br>02-07-2012<br>16-07-2012<br>27-09-2012<br>28-06-2012 |
| WO 2012086976 A2 | 28-06-2012 | CA 2792296 A1<br>CN 102823038 A<br>EP 2522045 A2<br>JP 2013506266 A<br>KR 101103606 B1<br>KR 20120071312 A<br>TW 201230468 A<br>US 2012244334 A1<br>WO 2012086976 A2 | 28-06-2012<br>12-12-2012<br>14-11-2012<br>21-02-2013<br>09-01-2012<br>02-07-2012<br>16-07-2012<br>27-09-2012<br>28-06-2012 |
| EP 2144315 A1 | 13-01-2010 | CA 2684869 A1<br>CN 101669236 A<br>EP 2144315 A1<br>JP 5118877 B2<br>JP 2008277128 A<br>KR 20090125280 A<br>US 2010119949 A1<br>WO 2008136361 A1 | 13-11-2008<br>10-03-2010<br>13-01-2010<br>16-01-2013<br>13-11-2008<br>04-12-2009<br>13-05-2010<br>13-11-2008 |
| US 2010261061 A1 | 14-10-2010 | JP 2007048692 A<br>US 2010261061 A1 | 22-02-2007<br>14-10-2010 |
| EP 2228856 A1 | 15-09-2010 | CN 101919089 A<br>EP 2228856 A1<br>KR 20100095473 A<br>US 2010248034 A1<br>WO 2009081704 A1 | 15-12-2010<br>15-09-2010<br>30-08-2010<br>30-09-2010<br>02-07-2009 |
| US 2010062229 A1 | 11-03-2010 | NONE | |
| JP 2004123505 A | 22-04-2004 | JP 3812944 B2<br>JP 2004123505 A | 23-08-2006<br>22-04-2004 |

EPO FORM P0459

For more details about this annex : see Official Journal of the European Patent Office, No. 12/82